# FASCICULE DE BREVET EUROPEEN

(11) **EP 2 151 373 B1**
(45) Date de publication et mention de la délivrance du brevet: **27.04.2011**
(21) Numéro de dépôt: 09165107.5
(22) Date de dépôt: 09.07.2009
(51) Int. Cl.: B62D 53/04, B62D 53/06

(54) **Ensemble routier**
Wegtransport
Road combination

(30) Priorité: 08.08.2008 FR 0804541
(43) Date de publication de la demande: 10.02.2010
(73) Titulaire: Maxicargo, 56500 Plumelin (FR)
(72) Inventeur: Le Goff, Jean-Philippe, 56150 Baud (FR)
(74) Mandataire: Hays, Bertrand

(56) Documents cités:
- EP-A- 0 186 886
- EP-A- 1 598 262
- DE-A1- 3 402 442

## Description

### Domaine technique

L'invention se rattache au domaine des véhicules routiers. Elle concerne plus particulièrement les ensembles routiers comprenant un véhicule tracteur, une semi-remorque et un système de liaison entre le véhicule tracteur et la semi-remorque. Elle vise plus spécifiquement un système de liaison qui assure un encombrement et une maniabilité de l'ensemble routier ainsi formé, équivalents à ceux d'un véhicule compact non articulé mais pour une charge utile nettement plus importante, en général de l'ordre du double.

Parmi les véhicules de transport routier de marchandises, il existe deux catégories de véhicules soumis chacun à une législation différente : les véhicules dits « utilitaires » ayant un poids total autorisé en charge maximum (PTAC) de 3,5 tonnes (T), et nécessitant uniquement la possession d'un permis B ; et les véhicules dits « poids lourds », ayant un PTAC compris entre 3,5 T et un maximum de 26 T, et nécessitant un permis poids lourds (permis C).

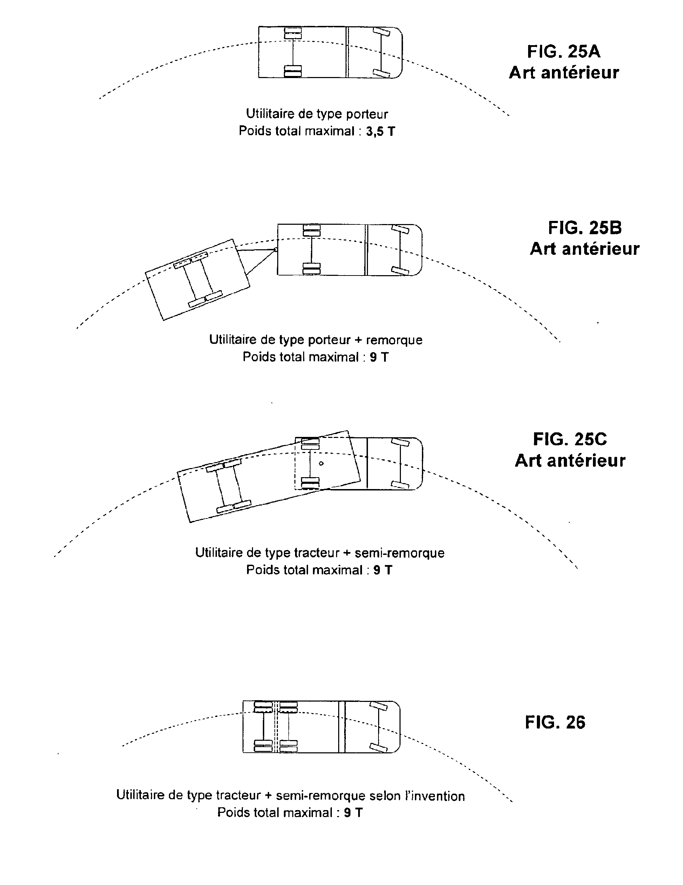

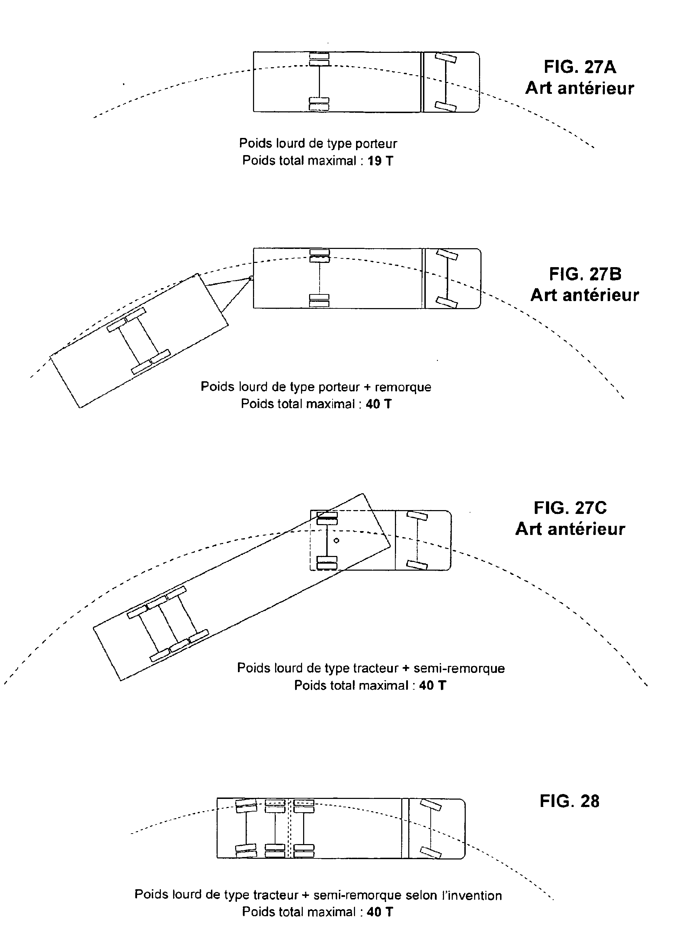

Pour faciliter la compréhension de l'exposé qui suit, le lecteur pourra utilement se reporter aux figures 25A-25C et 27A-27C qui illustrent l'art antérieur.

Le document EP 1 598 262 décrit un ensemble routier selon le préambule de la revendication 1.

### Art antérieur des véhicules utilitaires

Parmi les véhicules utilitaires ayant un PTAC de 3,5 T, il existe des véhicules utilitaires de type « châssis cabine », généralement acquis chez un concessionnaire de marque, qui peuvent ensuite être équipés d'une carrosserie, telle que par exemple une benne, une caisse frigorifique, une caisse grand volume, une grue, une citerne, un plateau, etc. Ce type de véhicule peut être piloté par la possession du permis B, mais sa charge utile maximale est souvent jugée insuffisante par les utilisateurs. En effet, le poids à vide du véhicule utilitaire carrossé peut atteindre dans certains cas 2,5 à 3 T, réduisant ainsi la charge utile à moins de 1 T, ce qui peut paraitre très limité en comparaison du volume de chargement disponible.

Différentes solutions existent pour bénéficier d'une charge utile supérieure.

Ainsi, une première solution consiste à utiliser des véhicules de type petits poids lourds de PTAC de l'ordre de 5 T. Cette solution présente un certain nombre d'inconvénients, notamment la nécessité de posséder le permis C, la gestion des disques du tachygraphe, les contrôles techniques annuels, les contrôles routiers fréquents, et les restrictions de circulation les week-ends et jours fériés ainsi qu'en zones urbaines.

Une autre solution permet d'augmenter de façon économique la charge transportée par un véhicule utilitaire carrossé de 3,5 T, par l'utilisation d'une remorque attelée dont le centre de gravité est situé sensiblement au-dessus de ses propres essieux porteurs et dont le point d'attelage au véhicule tracteur est situé en avant de la remorque et en arrière de l'essieu arrière du véhicule tracteur. Le permis E permet de tracter une remorque de plus de 750 kg dans la limite du poids total roulant autorisé (PTRA) du véhicule tracteur. Dans le cas des véhicules utilitaires de 3,5 T maximum, ce PTRA peut aller de 5 T à 9 T. La possession des permis B + E permet donc de conduire légalement un ensemble routier articulé de catégorie utilitaire ayant une charge utile nettement plus importante que celle du porteur utilisé seul, sans sa remorque. Ce PTRA peut, par comparaison, être l'équivalent du PTAC d'un petit poids lourd. Cette solution avantageuse présente toutefois un certain nombre d'inconvénients, notamment l'encombrement supplémentaire, la difficulté des manoeuvres due à l'articulation entre le véhicule et sa remorque, le décrochage de la remorque pour vider le véhicule tracteur ainsi qu'une moindre stabilité sur route.

Une autre solution permet également d'augmenter la charge transportée par un véhicule utilitaire. Sa transformation en véhicule "tracteur" autorise l'attelage d'une semi-remorque dont le point d'attelage se situe au-dessus ou en avant de l'essieu arrière du véhicule tracteur, et dont en outre le centre de gravité en charge se situe en avant de ses essieux porteurs. Le véhicule tracteur est alors équipé d'un faux-châssis muni d'une sellette, sur laquelle vient s'atteler la semi-remorque. Le PTRA de cet ensemble routier articulé peut aller de 5 T à 9 T. Le PTAC propre de la semi-remorque peut donc excéder 3,5 T et atteindre 6,5 T. Dans ce cas, elle est soumise à la réglementation poids lourds mais l'ensemble routier dont elle fait partie, et qui est tracté par un véhicule utilitaire, reste dans la catégorie utilitaire. La possession des permis B + E est donc nécessaire mais suffisante pour conduire légalement cet ensemble routier articulé appartenant à la catégorie utilitaire et ayant une charge utile équivalente au PTAC d'un petit poids lourd.

Cette solution avantageuse présente toutefois un certain nombre d'inconvénients, notamment la longueur de cet ensemble routier et son encombrement sur route, la difficulté des manoeuvres qui est la conséquence de la mobilité horizontale de l'articulation entre le tracteur et sa semi-remorque, une moindre stabilité sur route comparée à un véhicule de type porteur classique ainsi qu'un coût d'achat relativement élevé du fait d'une production à l'unité de ce type de véhicule.

### Art antérieur des véhicules poids lourds

Parmi les véhicules poids lourds ayant un PTAC compris entre 3,5 T et 26 T, il existe des véhicules dits « porteurs», qui peuvent être équipés d'une carrosserie, telle que par exemple une benne, une caisse frigorifique, une caisse grand volume, une grue, une citerne, un plateau, etc. Ce type de véhicule peut être piloté par la possession du permis C.

Si l'on souhaite transporter des marchandises avec un véhicule poids lourd exploitant la valeur maximale du poids total roulant autorisé (PTRA), de 40 tonnes en France et de 44 tonnes dans certains pays étrangers, il est nécessaire d'utiliser un ensemble routier de type articulé. Cet ensemble routier peut être composé soit d'une remorque attelée à un véhicule porteur dit « porteur-remorqueur », soit d'une semi-remorque attelée à un véhicule uniquement tracteur dit "tracteur". Il est nécessaire de posséder le permis E + C pour piloter ces ensembles routiers.

Cette solution largement utilisée partout dans le monde, présente l'avantage d'une charge utile importante mais aussi un certain nombre d'inconvénients, notamment l'important encombrement sur route, la difficulté des manoeuvres particulièrement dans le cas des porteurs tractant une remorque équipée d'un avant-train pivotant, d'où une double articulation dans le plan horizontal, une certaine instabilité sur route due aux articulations, le décrochage de la remorque parfois nécessaire pour charger ou vider le véhicule tracteur lorsqu'il est de type porteur avec portes à l'arrière.

Le but de la présente invention est donc de proposer un ensemble routier qui vise à pallier au moins l'un des inconvénients précités, qui notamment
- pour les véhicules dits utilitaires, présente une charge utile de l'ordre du double d'un véhicule utilitaire du type porteur classique et de l'ordre de celle d'un petit poids lourd, et/ou ne nécessite pas de posséder le permis C mais seulement le permis B + E ; et/ou,
- pour les véhicules dits utilitaires et poids lourds, utilise le PTRA du véhicule porteur qui peut être d'une valeur supérieure au double du PTAC, tout en offrant sensiblement la même facilité de conduite et de manoeuvre ainsi que la même stabilité sur route qu'un véhicule de type porteur classique non articulé, et/ou peut présenter un rapport charge utile / surface occupée au sol très supérieur à celle d'un véhicule classique qu'il soit de type porteur ou de type articulé avec remorque ou semi-remorque, avantage décisif pour les transports de produits pondéreux en zones urbaines par exemple, et/ou peut offrir dans un certain nombre de cas, un coût d'achat et/ou d'exploitation moindre par rapport à des véhicules de même encombrement mais de charge utile nettement plus faible ou de charge utile équivalente mais d'encombrement nettement supérieur.

### Exposé de l'invention

A cet effet, la présente invention, comme définie par la revendication 1, propose un ensemble routier rattaché au domaine des véhicules de la catégorie « utilitaires » et des véhicules de la catégorie « poids lourds », comprenant un véhicule tracteur, une semi-remorque et un système de liaison entre ledit véhicule tracteur et la semi-remorque, ledit système de liaison comprenant un dispositif d'attelage comprenant des moyens d'accrochage montés sur le châssis du véhicule tracteur, en avant de l'essieu arrière, aptes à coopérer avec des moyens d'accrochage complémentaires de la semi-remorque pour accrocher la semi-remorque au véhicule tracteur dans une position dite accrochée de la semi-remorque, de sorte que la semi-remorque soit articulée sur le véhicule tracteur au moins autour d'un axe transversal de tangage sensiblement horizontal en avant de l'essieu arrière du véhicule tracteur, caractérisé en ce que ledit système de liaison comprend en outre un dispositif de maintien et de guidage comprenant des moyens de maintien et de guidage montés sur un premier élément parmi la semi-remorque et le véhicule tracteur, aptes à coopérer dans la position accrochée de la semi-remorque, avec des moyens de maintien et de guidage complémentaires montés sur le deuxième élément pour d'une part maintenir, de manière permanente, les plans longitudinaux verticaux du véhicule tracteur et de la semi-remorque sensiblement confondus, lors de la conduite sur route, et, d'autre part, guider, de manière permanente, le pivotement de la semi-remorque autour dudit axe transversal de tangage.

Selon l'invention, le système de liaison comprend un dispositif de maintien et de guidage, agissant par exemple sensiblement entre l'essieu arrière du véhicule tracteur et l'essieu avant de la semi-remorque, appelé également premier essieu de la semi-remorque, permettant l'unique mouvement de tangage de la semi-remorque, dans le plan médian longitudinal vertical du véhicule tracteur, autour de l'axe transversal de tangage. Autrement dit, le dispositif de maintien et de guidage permet un maintien et un guidage permanents de la partie arrière de la semi-remorque pendant la marche normale sur route, et a pour rôle de maintenir les plans médians longitudinaux verticaux du véhicule tracteur et de la semi-remorque sensiblement confondus entre eux, et ainsi limiter, voire supprimer, les mouvements angulaires horizontaux tels que les désalignements provoqués par le braquage du véhicule tracteur ou mouvements de lacets, et les mouvement de roulis de la semi-remorque par rapport à son véhicule tracteur, et de réaliser un guidage dynamique des mouvements relatifs dans le plan longitudinal vertical de la semi-remorque par rapport à son véhicule tracteur en marche normale sur route. Selon l'invention, on entend par « semi-remorque », une remorque dont le point d'attelage ou d'accrochage se situe au-dessus ou en avant de l'essieu arrière du véhicule tracteur.

Pour un véhicule donné, la charge utile est maximale car elle est l'addition de celle du véhicule tracteur et de celle de la semi-remorque. L'absence d'articulation dans le plan horizontal, entre le véhicule tracteur et sa semi-remorque, alliée à l'action permanente du dispositif de maintien et de guidage, entre le véhicule tracteur et sa semi-remorque, procure en outre à cet ensemble routier la même facilité de pilotage et le même comportement routier qu'un véhicule porteur non articulé. Par construction, l'entraxe du dernier essieu du véhicule tracteur et du premier essieu de la semi-remorque, selon l'invention, peut être suffisamment réduit pour limiter encore l'encombrement en longueur de l'ensemble routier ainsi que le phénomène de ripage des pneus lors des virages.

Cet ensemble routier peut présenter un gabarit équivalent à celui d'un véhicule 3,5 T classique.

Pour un encombrement sensiblement identique, la charge utile du véhicule selon l'invention, sera environ le double de celle d'un véhicule utilitaire 3,5 T carrossé de façon traditionnelle (2 à 3 tonnes au lieu de 1 à 1,5 tonne). Le coût de revient kilogramme/kilomètre du transport de marchandises de l'ensemble routier selon l'invention est plus économique que celui d'un véhicule 3,5 T classique ou d'un poids lourd, en particulier pour les courtes distances.

Les figures 25A-25C, 26, 27A-27C, 28 illustrent les avantages que procure l'invention en termes de maniabilité et de charge utile rapportée à l'encombrement au sol.

Le dispositif de maintien et de guidage peut agir, sensiblement entre l'essieu arrière du véhicule tracteur et l'essieu avant de la semi-remorque, derrière l'essieu avant de la semi-remorque, et/ou devant l'essieu arrière du véhicule tracteur. Dans la position accrochée de la semi-remorque, lesdits moyens de maintien et de guidage sont ainsi aptes à coopérer, sensiblement entre l'essieu arrière du véhicule tracteur et l'essieu avant, derrière l'essieu avant de la semi-remorque, et/ou devant l'essieu arrière du véhicule tracteur, de préférence sensiblement entre lesdits essieux, avec lesdits moyens de maintien et de guidage complémentaires pour maintenir les plans longitudinaux verticaux sensiblement confondus et guider le pivotement de la semi-remorque autour dudit axe transversal.

Selon un mode de réalisation, les moyens de maintien et de guidage comprennent un support monté pivotant, autour d'un premier axe transversal sensiblement horizontal, sur le premier élément parmi la semi-remorque et le véhicule tracteur, et portant au moins un organe de maintien et de guidage décalé longitudinalement par rapport audit premier axe transversal, les moyens de maintien et de guidage complémentaires comprenant au moins une glissière longitudinale fixée au deuxième élément dans laquelle ledit organe est apte à coulisser dans la position accrochée de la semi-remorque, ladite glissière assurant un maintien vertical et latéral dudit organe, ledit organe pouvant éventuellement coulisser dans ladite glissière lors des mouvements de tangage.

Selon un mode de réalisation, la semi-remorque comprend au moins un timon d'attelage équipé à son extrémité libre desdits moyens d'accrochage complémentaires, en particulier sous la forme d'un anneau d'accrochage, ledit timon d'attelage étant avantageusement de type télescopique à freinage par inertie, ledit organe coulissant dans ladite glissière lors de l'extension/contraction du timon d'attelage. Le dispositif de maintien et de guidage selon l'invention permet l'utilisation d'une semi-remorque simple, peu onéreuse, équipée d'un timon d'attelage télescopique à freinage par inertie situé sur l'axe longitudinal de la semi-remorque.

Selon un mode de réalisation, ledit support porte deux organes formés de deux galets montés rotatifs autour d'un second axe transversal parallèle au premier axe transversal et décalé longitudinalement par rapport à ce dernier, les deux galets étant aptes à venir s'engager dans lesdits moyens de maintien et de guidage complémentaires formés de deux rails de section transversale en U montés en vis à vis symétriquement de part et d'autre du plan longitudinal du deuxième élément. Avantageusement, ledit support est équipé d'un système d'amortissement et/ou d'un système de butées pour maîtriser et/ou limiter son pivotement sur le premier élément et ainsi maîtriser et/ou limiter les mouvements relatifs de tangage de la semi-remorque par rapport au véhicule tracteur dans son plan vertical longitudinal.

Le support portant les galets peut être monté pivotant sur le châssis de la semi-remorque, de sorte que le second axe transversal de rotation des galets soit disposé en amont du premier essieu de la semi-remorque, les rails étant monté fixe sur la partie arrière du châssis du véhicule tracteur, en aval de l'essieu arrière. Dans le cas inverse, le support portant les galets est monté pivotant sur le châssis du véhicule tracteur, de sorte que le second axe transversal de rotation des galets soit disposé en aval de l'essieu arrière du véhicule tracteur, les rails étant montés fixes sur le châssis de la semi remorque, en amont du premier essieu.

Selon un autre mode de réalisation, ledit support comprend deux bras montés pivotant symétriquement de part et d'autre du plan longitudinal du premier élément autour du premier axe transversal, les parties d'extrémité des bras constituant deux organes aptes à venir s'engager dans lesdits moyens de maintien et de guidage complémentaires formés de deux fourreaux de section transversale fermée montés fixes symétriquement de part et d'autre du plan longitudinal du deuxième élément.

Les deux bras peuvent être montés pivotant sur le châssis du véhicule tracteur, les fourreaux étant fixés sur le châssis de la semi-remorque, en amont du premier essieu de la semi-remorque.

Selon un autre mode de réalisation, les moyens de maintien et de guidage comprennent deux vérins montés sensiblement verticalement, symétriquement de part et d'autre du plan longitudinal du premier élément, chaque vérin comprenant un cylindre, un piston monté coulissant dans ledit cylindre et définissant une chambre supérieure et une chambre inférieure, une tige de piston traversant de manière étanche ledit cylindre de chaque côté et présentant deux extrémités libres par lesquelles ledit vérin est fixé audit premier élément, les chambres supérieure et inférieure d'un premier vérin étant en communication fluidique respectivement avec les chambres inférieure et supérieure du deuxième vérin, chaque cylindre portant extérieurement un tube longitudinal, lesdits moyens de maintien et de guidage complémentaires comprenant deux plots longitudinaux montés fixes sur le deuxième élément, symétriquement de part et d'autre de son plan longitudinal, lesdits plots étant aptes à s'engager et à coulisser dans lesdits tubes longitudinaux dans la position accrochée de la semi-remorque.

Selon une particularité, la semi-remorque comprend un châssis équipé d'un essieu à bras poussés comprenant de chaque côté un bras de suspension dont une première extrémité est articulée par rapport au châssis selon un axe transversal sensiblement horizontal, et dont la deuxième extrémité disposée vers l'avant de la semi-remorque, porte au moins une roue, l'essieu à bras poussés étant avantageusement doté d'un système anti-plongée comportant de chaque côté une paire de bielles articulées entre elles selon un axe sensiblement parallèle à l'axe de la roue, une bielle étant articulée par rapport au châssis, l'autre bielle étant fixée rigidement à la deuxième extrémité du bras de suspension, par exemple à une flasque de freins montée à ladite deuxième extrémité.

Ce mode de réalisation est particulièrement intéressant car il permet de rapprocher les roues de la semi-remorque au plus près des roues de l'essieu arrière du véhicule tracteur, même lorsque ce dernier est équipé d'un système de suspension à lames encombrant. Ainsi, pour la mise en oeuvre de l'invention, il est possible d'utiliser pour le véhicule tracteur un châssis cabine classique, généralement équipé de suspension à lames.

Selon une autre particularité, le dispositif d'attelage comprend en outre des moyens de maintien et de guidage montés sur un premier élément parmi le châssis de la semi-remorque, sur la partie amont du châssis de la semi-remorque, et le châssis du véhicule tracteur, en amont de l'essieu arrière du véhicule tracteur, aptes à coopérer avec des moyens de maintien et de guidage complémentaires de l'autre élément lorsque la semi-remorque est en position accrochée pour maintenir, en amont de l'essieu arrière du véhicule tracteur, les plans longitudinaux verticaux du véhicule tracteur et de la semi-remorque sensiblement confondus entre eux et, de préférence, transmettre au châssis du véhicule tracteur la charge constituée par la partie avant de la semi-remorque.

Selon un mode de réalisation, les moyens de maintien et de guidage du dispositif d'attelage comprennent deux glissières de section transversale en U montées en vis-à-vis, symétriquement de part et d'autre du plan longitudinal du premier élément, et les moyens de maintien et de guidage complémentaires comprennent deux galets montés rotatifs autour d'un axe transversal de rotation symétriquement de part et d'autre du plan longitudinal vertical du deuxième élément, lesdits galets étant aptes à venir coulisser dans lesdites glissières et leur axe transversal de rotation étant sensiblement alignés transversalement avec l'axe de tangage dans la position accrochée de la semi-remorque. Dans ce cas, le dispositif d'attelage peut comprendre des moyens d'accrochage disposés sensiblement selon le plan longitudinal du véhicule tracteur et coopère avec des moyens d'accrochage complémentaires disposés selon le plan longitudinal de la semi-remorque, de sorte que l'accrochage soit réalisé en au moins un point axial, tel que par exemple une sellette centrale associée à un pivot de la semi-remorque ou un système de chape et de broche escamotable associé à un anneau d'un timon axial. Dans le cas d'un attelage par timon télescopique à freinage par inertie, les galets sont montés sur le véhicule tracteur, de sorte que leur axe de rotation soit toujours confondu avec l'axe de tangage.

Dans un autre mode de réalisation, les moyens de maintien et de guidage du dispositif d'attelage comprennent au moins deux fourreaux longitudinaux de section transversale fermée montés symétriquement de part et d'autre du plan longitudinal d'un premier élément parmi le châssis de la semi-remorque et le châssis du véhicule tracteur, et les moyens de maintien et de guidage complémentaires comprennent au moins deux bras longitudinaux équipés à leur extrémité d'au moins un rouleau transversale à axe horizontal, les dits bras étant montés pivotant autour d'un axe transversal de rotation symétriquement de part et d'autre du plan longitudinal vertical du deuxième élément, lesdits bras étant aptes à venir s'engager dans lesdits fourreaux et leur axe transversal de rotation étant sensiblement alignés avec l'axe de tangage dans la position accrochée de la semi-remorque.

Selon un mode de réalisation, le châssis du véhicule tracteur est équipé de deux poutres longitudinales montées pivotantes autour d'un axe transversal définissant ledit axe de tangage, et dont les bras aval constituent lesdits bras de guidage et de maintien, les bras amont étant reliés en extrémité par une traverse portant lesdits bras longitudinaux de maintien et de guidage du dispositif d'attelage, ces bras permettant avantageusement de transmettre au châssis du véhicule tracteur la charge constituée par la partie avant de la semi-remorque.

Selon un autre mode de réalisation, le dispositif d'attelage comprend des premiers et seconds moyens d'accrochage disposés symétriquement sensiblement de part et d'autre du plan longitudinal du véhicule tracteur et coopèrent respectivement avec des premiers et seconds moyens d'accrochage complémentaires disposés symétriquement de part et d'autre du plan longitudinal de la semi-remorque, de sorte que l'accrochage soit réalisé en au moins deux points, lesdits premiers et seconds moyens d'accrochage constituant les moyens de maintien et de guidage du système d'attelage et transmettent au châssis du véhicule tracteur la charge constituée par la partie avant de la semi-remorque. Le dispositif d'attelage peut comprendre par exemple des moyens d'accrochage connus tels que deux sellettes d'accouplement, montées sur le châssis du véhicule tracteur en amont de son essieu arrière symétriquement et sensiblement de part et d'autre de son plan longitudinal, associées à deux pivots d'accouplement complémentaires montés sur le châssis de la semi-remorque ou bien deux timons d'attelage avec anneau d'accrochage montés de façon similaire sur le châssis de la semi-remorque, associés à deux chapes et broches d'accrochage complémentaires montés sur le châssis du véhicule tracteur. Dans ces deux cas, les moyens de verrouillage à la fermeture des deux moyens d'accrochage sont liés, l'un ne pouvant se verrouiller sans l'autre.

Avantageusement, le véhicule tracteur comprend un faux châssis monté sur le châssis du véhicule tracteur, sur lequel sont montés les moyens d'accrochage et les éventuels moyens de maintien du dispositif d'attelage, et les moyens de maintien et de guidage du dispositif de maintien et de guidage.

Selon une particularité, le centre de gravité en charge de la semi-remorque est situé sensiblement au-dessus de son ou ses essieux porteurs.

Selon une autre particularité, le centre de gravité en charge de la semi-remorque est situé en avant de son ou ses essieux porteurs.

La présente invention est particulièrement intéressante dans le cadre des véhicules utilitaires d'un PTAC n'excédant pas 3,5 T car elle permet de piloter un ensemble routier d'un poids total pouvant atteindre 9 T équivalant à celui d'un petit poids lourd, sans posséder le permis poids lourds (permis C) car seuls les permis B + E sont nécessaires. Ainsi, selon un mode de réalisation, le véhicule tracteur de l'ensemble selon l'invention a un PTAC inférieur ou égal à 3,5T, ledit ensemble formant un véhicule de catégorie « utilitaire » de type tracteur avec semi-remorque.

Dans un mode de réalisation particulier, les moyens d'accrochage montés sur le véhicule tracteur sont constitués par une sellette d'accouplement montée basculante autour d'un axe transversal de tangage, destinée à coopérer avec des moyens d'accrochage de la semi-remorque constitués d'un pivot d'accouplement, la semi-remorque comprenant au moins un essieu suiveur.

Selon un autre mode de réalisation, ledit véhicule tracteur a un PTAC supérieur à 3,5 T et pouvant aller jusqu'à 26T, ledit ensemble formant un véhicule de catégorie « poids lourds » de type tracteur avec semi-remorque. Dans ce cas, les moyens d'accrochage montés sur le véhicule tracteur sont de préférence constitués par une sellette d'accouplement montée basculante autour d'un axe transversal de tangage, destinée à coopérer avec des moyens d'accrochage de la semi-remorque constitués d'un pivot d'accouplement, et/ou la semi-remorque comprend au moins un essieu suiveur et/ou un système de freinage pneumatique.

L'invention permet d'utiliser le PTRA de 44 tonnes d'un véhicule « porteur-remorqueur » dont le PTAC est de 19 tonnes ou de 26 tonnes tout en offrant un encombrement extérieur ainsi qu'une facilité de conduite et de manoeuvre sensiblement identiques à un véhicule poids lourds de type porteur de 19 ou 26 tonnes classique non articulé. Cette solution de compacité, de maniabilité et de facilité de conduite sur route proposée par l'invention ne se limite pas à ces seuls véhicules poids lourds de PTAC 19 ou 26 tonnes. Elle trouve également son intérêt dans toute la gamme des poids lourds comprise entre 3,5 tonnes et 26 tonnes avec plus ou moins de pertinence selon, entre autre, l'importance du gain en charge utile effective que permet l'invention rapporté à l'encombrement au sol du véhicule, l'avantage de piloter un véhicule bénéficiant d'une manoeuvre facile pour des livraisons en zone urbaine par exemple, l'économie financière qui peut être réalisée dans certains cas, à l'achat ou à l'exploitation, par rapport à un véhicule articulé classique de charge utile équivalente mais plus puissant ou plus encombrant.

### Description sommaire des figures

L'invention sera mieux comprise, et d'autres buts, détails, caractéristiques et avantages apparaîtront plus clairement au cours de la description explicative détaillée qui va suivre de cinq modes de réalisation particuliers actuellement préférés de l'invention, en référence aux dessins schématiques annexés, sur lesquels :
- la figure 1 est une vue en perspective d'un ensemble routier selon un premier mode de réalisation, comprenant un véhicule tracteur et une semi-remorque équipée d'une caisse, ladite semi-remorque étant en position non accrochée ;
- la figure 2 est une autre vue en perspective de l'ensemble routier de la figure 1, sans la caisse sur la semi-remorque ;
- la figure 3 est une vue de dessus de l'ensemble routier de la figure 2 ;
- la figure 4 est une vue de dessus analogue à la figure 3, la semi-remorque étant en position accrochée ;
- la figure 5 est une vue en perspective de l'ensemble routier de la figure 4, sur laquelle le châssis du véhicule tracteur est illustré partiellement, sans la partie amont portant la cabine ;
- la figure 6 est une de côté de l'ensemble routier en position accrochée lorsque le véhicule tracteur tracte la remorque sur terrain plat ;
- la figure 7A est une vue analogue à celle de la figure 6 illustrant l'ensemble routier lors d'une phase de freinage ;
- les figures 7B et 7C sont des vues analogues à celle de la figure 6 illustrant les mouvements de tangage de la semi-remorque selon le terrain ;
- la figure 8 est une vue en perspective d'un ensemble routier selon un deuxième mode de réalisation, comprenant un véhicule tracteur équipée d'une caisse et une semi-remorque équipée d'une caisse, ladite semi-remorque étant en position non accrochée ;
- la figure 9 est une autre vue en perspective de l'ensemble routier de la figure 8, sans les caisses sur le véhicule tracteur et la semi-remorque ;
- la figure 10 est une vue en perspective de l'ensemble routier de la figure 8, ladite semi-remorque étant en position accrochée ;
- la figure 11 est une vue en perspective de l'ensemble routier de la figure 10, sans les caisses sur le véhicule tracteur et la semi-remorque ;
- les figures 12 et 13 représentent deux vues en perspective d'un ensemble routier selon un troisième mode de réalisation, comprenant une semi-remorque sans la caisse en position non accrochée et un véhicule tracteur, le châssis du véhicule tracteur étant illustré partiellement, sans la partie amont portant la cabine ;
- la figure 14 est une vue de côté de l'ensemble routier des figures 12 et 13 ;
- la figure 15 est une vue en perspective de l'ensemble routier des figures 12 et 13, la semi-remorque en position accrochée ;
- les figures 16A et 16B sont des vues de côté de l'ensemble routier de la figure 15 illustrant les mouvements de tangage de la semi-remorque, le véhicule tracteur étant représenté intégralement ;
- les figures 17 et 18 représentent deux vues en perspective d'un ensemble routier selon un quatrième mode de réalisation, comprenant une semi-remorque sans la caisse en position non accrochée et un véhicule tracteur, le châssis du véhicule tracteur étant illustré partiellement, sans la partie amont portant la cabine ;
- la figure 19 est une vue de côté de l'ensemble routier des figures 17 et 18 ;
- la figure 20 est une vue en perspective de l'ensemble routier des figures 17 et 18, la semi-remorque en position accrochée ;
- les figures 21A et 21B sont des vues de côté de l'ensemble routier de la figure 20 illustrant les mouvements de tangage de la semi-remorque, le véhicule tracteur étant représenté intégralement ;
- les figures 22 et 23 représentent deux vues en perspective d'un ensemble routier selon un cinquième mode de réalisation, comprenant une semi-remorque équipée d'une caisse en position non accrochée et un véhicule tracteur ;
- la figure 24 est une vue en perspective de l'ensemble routier des figures 12 et 23, la semi-remorque en position accrochée ;
- les figures 25A, 25B et 25C illustrent les encombrements et charges maximales de différents types de véhicules utilitaires de l'art antérieur ;
- la figure 26 illustre l'encombrement et la charge maximale d'un ensemble routier selon l'invention de type véhicule utilitaire ;
- les figures 27A, 27B et 27C illustrent les encombrements et charges maximales de différents types de véhicules poids lourds de l'art antérieur ; et,
- la figure 28 illustre l'encombrement et la charge maximale d'un ensemble routier selon l'invention de type véhicule poids lourd.

### Description des modes de réalisation

### Mode de réalisation N°1

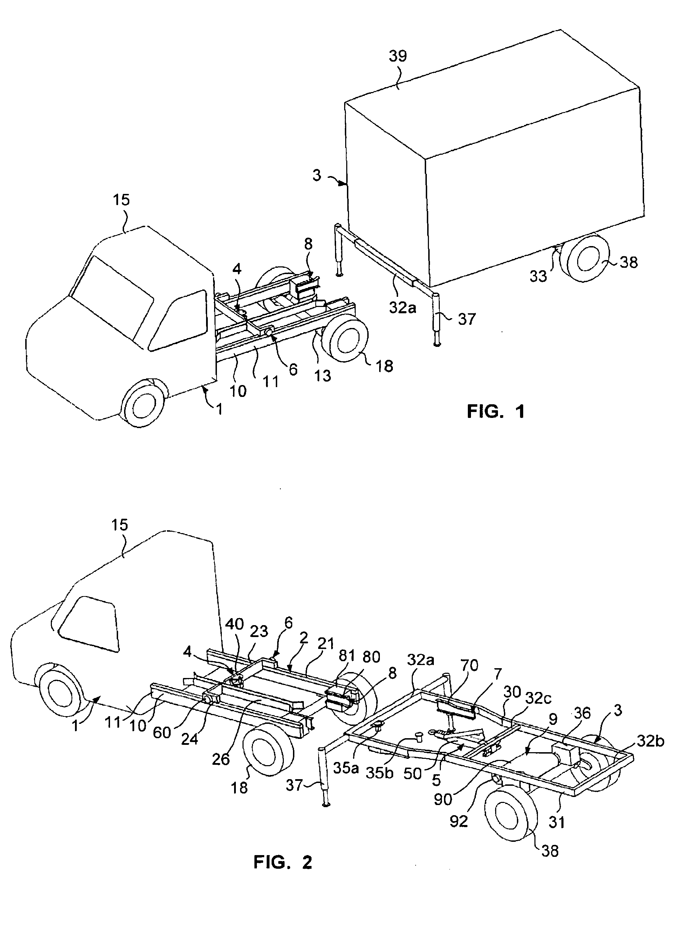

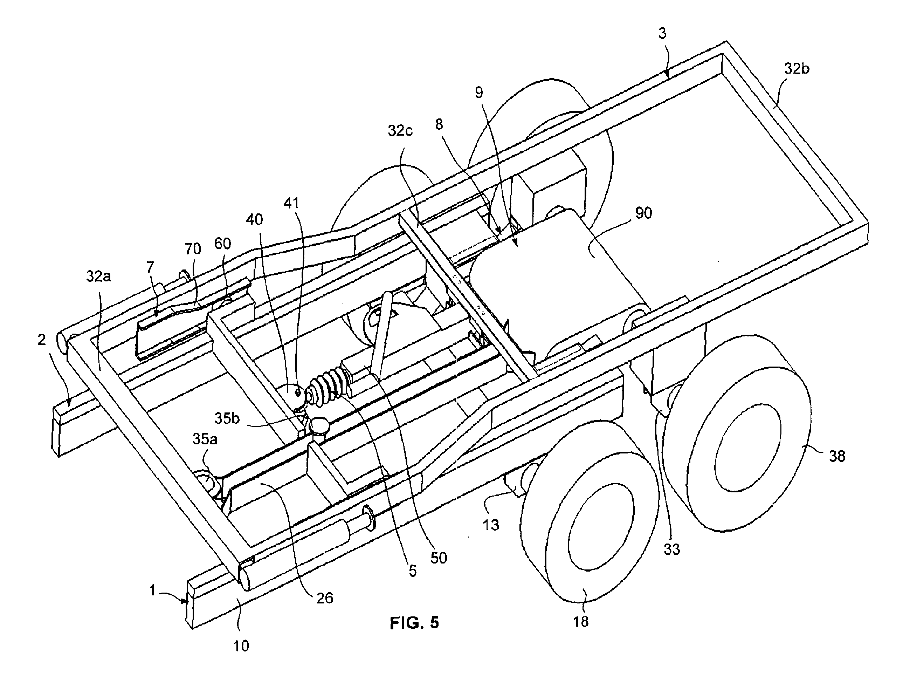

Les figures 1 à 5 illustrent un ensemble routier selon un premier mode de réalisation comprenant un véhicule tracteur 1 et une semi-remorque 3 pouvant être reliée au véhicule tracteur par un système de liaison, l'ensemble routier formant un véhicule de catégorie utilitaire de type tracteur avec semi-remorque. La semi-remorque est, comme défini précédemment, un véhicule tracté dont le point d'attelage se situe au-dessus ou en avant de l'essieu arrière du véhicule tracteur. En outre, dans le présent mode de réalisation. Le centre de gravité de la semi-remorque en charge est situé en avant du ou de ses essieux porteurs.

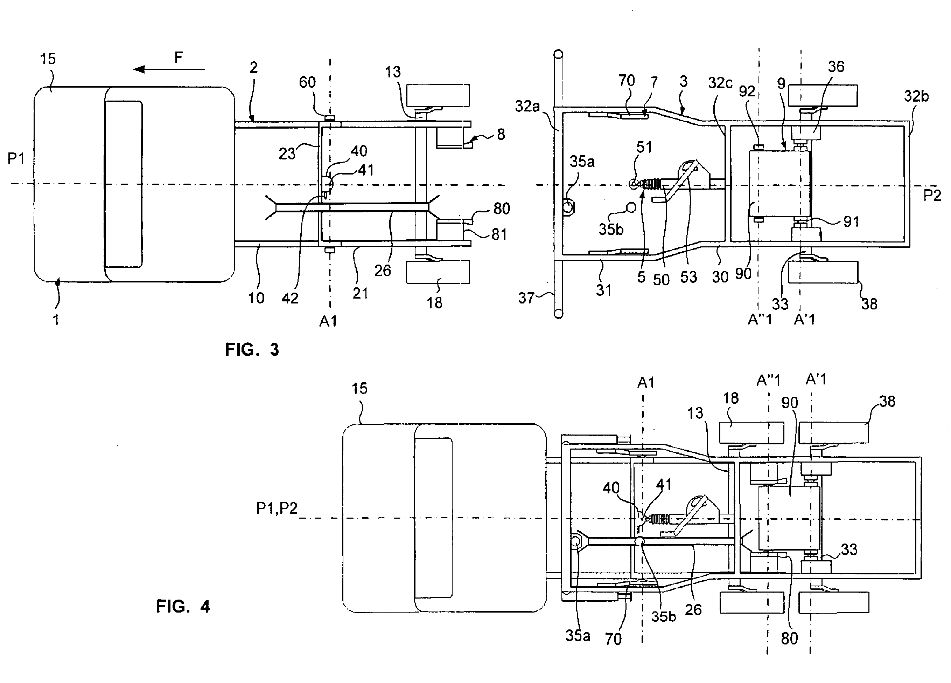

En référence en particulier aux figures 2 et 3, le véhicule tracteur comprend un châssis 10 comprenant deux longerons 11 reliés parallèlement entre eux par plusieurs traverses (non représentées), sur lequel sont montés un essieu directionnel avant et un essieu arrière 13 portant deux roues arrière 18, l'essieu arrière étant de type à bras tirés avec un système de suspension à barres de torsion connu en soi. Le châssis porte en partie avant une cabine 15 et le système de motorisation du véhicule. Le véhicule tracteur est par exemple formé à partir d'un châssis cabine classique d'un constructeur équipé de système de suspension à lames, de PTAC inférieur ou égal à 3,5 T et de PTRA pouvant atteindre 9 T, et dont l'essieu arrière 13 est modifié pour former un essieu à suspension à barres de torsion afin de limiter l'encombrement et de permettre, tel que décrit ci-après, un entraxe réduit entre ledit essieu arrière 13 et l'essieu 33 de la semi-remorque en position accrochée de la semi-remorque. Le châssis présente un plan longitudinal de symétrie vertical représenté sur la figure 3 sous la référence P1.

La semi-remorque 3 comprend un châssis 30 comprenant deux longerons 31 reliés parallèlement entre eux par plusieurs traverses, dont notamment une traverse avant 32a et une traverse arrière 32b reliant respectivement les extrémités avant et arrière des longerons. Le châssis porte en partie arrière un essieu 33 unique à bras tirés, portant deux roues 38, et équipé d'un système de suspension à barres de torsion. Le châssis présente un plan longitudinal de symétrie vertical, représenté sur la figure 3 sous la référence P2. L'essieu de la semi-remorque a une capacité de 3,5 T dans le cas d'un véhicule tracteur de PTRA de 7 T. Si le PTRA du véhicule tracteur est supérieur à 7 T, la semi-remorque peut avoir une capacité de charge supérieure à 3,5 T, en prévoyant par exemple un deuxième essieu.

Le châssis de la semi-remorque peut être équipé de différents types de carrosserie, par exemple d'une caisse 39 de grand volume telle qu'illustrée à la figure 1. La semi-remorque est équipée de deux béquilles 37 latérales, réglables en hauteur, servant à supporter le poids de l'avant de la semi-remorque en l'absence du véhicule tracteur, tel qu'illustré à la figure 1. Ces béquilles sont montées amovibles sur le châssis, et/ou escamotables horizontalement sous le plancher de la caisse 39 de la semi-remorque pour la conduite sur route.

Le système de liaison de l'ensemble comprend un dispositif d'attelage comportant des moyens d'accrochage 4 montés sur le châssis du véhicule tracteur coopérant avec des moyens d'accrochage 5 de la semi-remorque pour accrocher la semi-remorque au véhicule tracteur dans une position dite accrochée de la semi-remorque.

Lesdits moyens d'accrochage sont avantageusement de type rapide normalisé pour utilisation routière, et sont formés du coté de la semi-remorque par un timon axial 50, monté sur le châssis entre les deux longerons au moyen d'une traverse intermédiaire 32c, et dont l'extrémité libre est munie d'un anneau 51 d'attelage. L'anneau est apte à coopérer avec des moyens d'accrochage 4 du véhicule tracteur formés d'une broche 41 montée sur une chape 40 et actionnable par un levier 42 (Figure 3). Dans le présent mode de réalisation, le timon 50 est de type timon d'attelage télescopique relié à un dispositif de freinage à inertie, connu en soi, apte à commander les freins des roues de la semi-remorque. Lorsque le véhicule tracteur tracte la semi-remorque, le timon télescopique reste allongé et les roues de la semi-remorque tournent librement. Lorsque le véhicule tracteur freine, la semi-remorque tend par inertie à avancer plus vite que le véhicule tracteur, le timon télescopique se contracte, ce qui actionne progressivement le freinage des roues de la semi-remorque. Le timon est équipé d'un levier de frein à main 53 actionnable à l'arrêt lorsque la semi-remorque est en stationnement (Figure 3).

Le dispositif d'attelage comprend en outre des moyens de maintien et de guidage 6, 7 comprenant du côté du véhicule tracteur deux galets latéraux 60 rotatifs disposés symétriquement sur le châssis de part et d'autre de la chape 40, de manière à définir un axe transversal dit de tangage A1 qui est perpendiculaire au plan longitudinal P1 et confondu avec les axes de rotation des galets et qui passe par l'axe sensiblement vertical de la broche. Côté semi-remorque, les moyens de maintien et de guidage 7 comprennent deux rails latéraux 70 de section transversale en U, montés en vis-à-vis sur les longerons, symétriquement de part et d'autre du plan P2, avec les branches orientées vers ledit plan P2. Lors de l'accrochage de la semi-remorque, les galets latéraux 60 s'engagent dans les rails latéraux 70 et sont bloqués verticalement dans ces derniers, de manière à bloquer les mouvements de roulis et les mouvements horizontaux de la semi-remorque au niveau du dispositif d'attelage, en amont de l'essieu arrière. Le dispositif d'accrochage ne laisse ainsi à la semi-remorque qu'un seul un degré de liberté dans le plan longitudinal vertical du véhicule tracteur, la semi-remorque pouvant uniquement effectuer des mouvements de rotation, dit de tangage, autour de l'axe de tangage A1. Pour faciliter l'engagement des galets dans les rails, ces derniers présentent une entrée amont dont la distance entre les branches du U est supérieure au diamètre des galets, cette distance se réduisant progressivement d'amont en aval pour correspondre sensiblement en partie arrière du rail au diamètre des galets.

Les galets rotatifs, coaxiaux à l'axe de tangage qui passe par le point d'accrochage dudit timon télescopique, assurent le report de charge de la semi-remorque sur le châssis du véhicule tracteur tout en garantissant le déplacement longitudinal relatif entre le véhicule tracteur et sa semi-remorque qui est nécessaire au bon coulissement du timon télescopique qui assure le freinage par inertie dans le plan médian longitudinal vertical du véhicule tracteur.

Le timon télescopique étant conçu pour supporter uniquement les efforts de traction et de compression dus au véhicule attelé, le système composé entre autres des galets rotatifs et des rails de section en U situés de part et d'autre du dit timon télescopique, supporte tous les autres efforts tant verticaux qu'horizontaux appliqués aux différents moyens d'accrochage dont la charge constituée par la partie avant de la semi-remorque.

Les moyens d'accrochage 4 du véhicule tracteur et les galets sont disposés en avant de l'essieu arrière 13, par rapport à la direction F de déplacement du véhicule tracteur en marche avant, et à une distance telle qu'à la charge maximale, la répartition des charges entre les essieux avant et arrière du véhicule tracteur soit conforme aux spécifications du constructeur du châssis.

Dans le présent mode de réalisation, le dispositif d'attelage est monté sur un faux châssis 2 qui est assemblé sur le châssis 10 du véhicule tracteur. Le faux châssis comprend deux barres longitudinales 21 reliées parallèlement entre elles par des traverses (non représentées). La chape 40 est montée par sa base sur une poutre transversale 23 dont les extrémités sont solidaires de deux supports 24 assemblés sur les barres longitudinales 21. Les galets latéraux 60 sont montés rotatifs sur la face extérieure des supports au moyen d'axes s'étendant vers l'extérieur. Le faux châssis repose par ses barres longitudinales 21 sur les longerons 11, l'assemblage du faux châssis sur le châssis étant réalisé par tout moyen approprié tel que par exemple des silentblocs afin d'atténuer ou de supprimer la transmission des éventuels chocs ou bruits vers la cabine du véhicule tracteur.

Selon l'invention, le système de liaison comprend en outre des moyens de maintien et de guidage 8, 9 pour bloquer entre l'essieu arrière 13 du véhicule tracteur et l'essieu 33 de la semi-remorque, les mouvements horizontaux et les mouvements de roulis de la semi-remorque, ainsi que pour guider en permanence entre les deux essieux, les mouvements de tangage autour de l'axe de tangage A1.

Ces moyens de maintien et de guidage comprennent côté semi-remorque un caisson 90 de forme globalement parallélépipédique, ledit caisson étant monté pivotant sur le châssis autour d'un axe transversal A'1, disposé sous les longerons 31, au dessus de l'axe de l'essieu 33, sensiblement à la verticale ou légèrement devant l'essieu tel qu'illustré sur les figures 3 et 4. Ce montage pivotant est réalisé au moyen d'une barre transversale cylindrique 91 fixée aux parois latérales du caisson, à proximité de sa paroi arrière et parallèlement à cette dernière, la barre traversant les parois latérales et ses extrémités sont montées rotatives entre les longerons 31, par exemple via des supports 36 solidaires desdits longerons. Des galets 92 sont en outre montés rotatifs sur les parois latérales autour d'un axe A"1, qui est parallèle à l'axe A'1 et disposé à proximité de la paroi avant du caisson. Le montage rotatif de ces galets 92 est réalisé par une barre transversale cylindrique montée fixe sur les parois latérales. Pour rigidifier le caisson et obtenir un caisson résistant à la flexion et à la torsion, le caisson est fabriqué en acier à haute limite élastique et muni de parois internes de renfort.

Côté véhicule tracteur, lesdits moyens de maintien 8 comprennent des rails 80 de section transversale en U montés sur le châssis 10, symétriquement en vis-à-vis de part et d'autre du plan Pi, derrière l'essieu arrière 13, avec leurs branches orientées vers le plan P1. Lors de l'accrochage, les galets 92 s'engagent dans les rails 80 et sont bloqués verticalement et horizontalement dans lesdits rails. Comme précédemment, pour faciliter l'engagement des galets dans les rails, chaque rail 80 présente en entrée une distance entre les branches qui est supérieure au diamètre des galets 92, cette distance diminuant progressivement en direction de l'avant du véhicule jusqu'à correspondre sensiblement au diamètre des galets. Les rails sont avantageusement fixés sur les barres longitudinales du faux châssis, par exemple par l'intermédiaire de support 81.

Pour l'accrochage de la semi-remorque sur le véhicule tracteur depuis la position illustrée à la figure 1, le véhicule tracteur est reculé de sorte que les plans P1 et P2 restent sensiblement confondus. Les barres longitudinales 21 du faux châssis passent sous la traverse avant 32a, le timon 50 passe entre les longerons 11, et les rails 70 passent de part et d'autre des longerons 11. Les galets 60 s'engagent dans les rails 70 et les galets 92 s'engagent dans les rails 80. Dans la position accrochée, l'essieu 33 de la semi-remorque est disposé en arrière et au plus près de l'essieu arrière 13 du véhicule tracteur, tout en maintenant un espace suffisant pour permettre le coulissement du timon lors des phases de freinage, ceci afin de limiter le phénomène de ripage lors des manoeuvres et limiter au maximum la longueur de l'ensemble routier. Le caisson avec ses galets engagés dans les rails reprend une partie des contraintes mécaniques s'appliquant sur le dispositif d'attelage, et empêche les mouvements latéraux de la semi-remorque par rapport au véhicule tracteur, ainsi que les mouvements de roulis de la semi-remorque autour de l'axe longitudinal de la semi-remorque passant par le plan P2 et le point d'accrochage défini par la broche 41 et l'anneau 51.

Pour faciliter l'opération d'accrochage, le faux châssis est équipé d'un rail 26 de guidage longitudinal, formé d'un profilé en U dont les branches sont orientées verticalement vers le haut, dans lequel un plot vertical 35a solidaire du châssis, par exemple de la traverse avant, est apte à venir s'engager et coulisser, avant l'engagement des galets 60 et 92 dans les rails 70 et 80. Avantageusement, un deuxième plot vertical 35b venant également s'engager dans le rail de guidage est positionné juste en avant de l'anneau 51, ce deuxième plot étant par exemple solidaire du plancher de la caisse, ou l'inverse, le rail 26 étant fixé longitudinalement sous la partie avant du châssis 30 de la semi-remorque, branches orientées verticalement vers le bas, et les plots 35a et 35b solidaires du châssis 10, fixés verticalement sur le faux châssis 2.

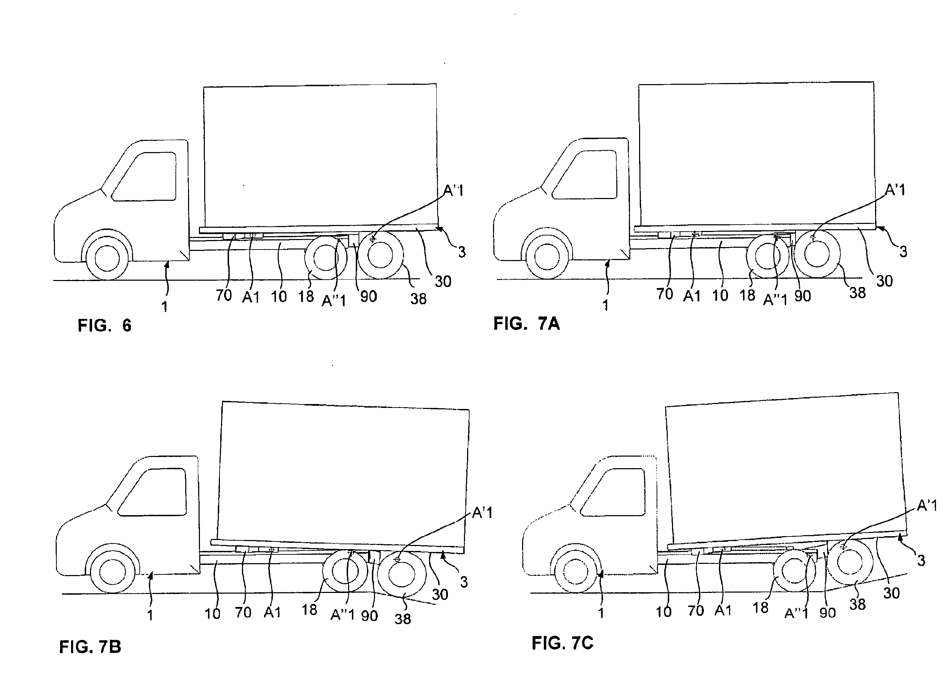

La figure 6 illustre l'ensemble routier selon l'invention avec la semi-remorque en position accrochée dans le cas où l'ensemble est à l'arrêt sur terrain plat ou lorsque le véhicule tracteur tracte la semi-remorque sur terrain plat. Le caisson est disposé sensiblement horizontalement.

La figure 7A illustre l'ensemble dans le cas d'une phase de freinage du véhicule tracteur. Le timon coulisse et commande le dispositif de freinage des roues de la semi-remorque. Lors de ce déplacement axial, l'essieu de la semi-remorque se rapproche de l'essieu arrière du véhicule tracteur, les galets 92 du caisson coulissent dans les rails 80.

Les figures 7B et 7C illustrent les mouvements de tangage de la semi-remorque autour de l'axe A1 de tangage dans le cas de terrains en pente, lors de ces mouvements de tangage, les galets 92 coulissent dans les rails 80.

Le châssis de la semi-remorque comprend avantageusement des amortisseurs pour maîtriser et réduire l'ampleur des mouvements relatifs de tangage de la semi-remorque par rapport au véhicule tracteur ainsi que de butées haute et basse pour limiter le pivotement du caisson autour de son axe A'1 et empêcher des déplacements extrême dans le plan vertical.

### Mode de réalisation N°2

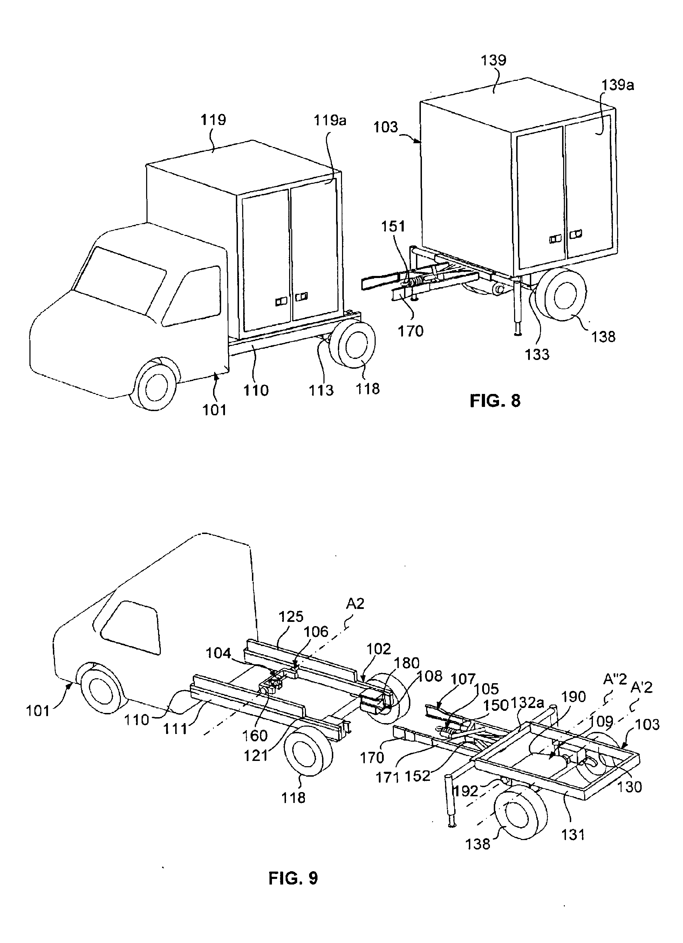

Les figures 8 à 11 illustrent un ensemble routier selon un deuxième mode de réalisation, comprenant un véhicule tracteur 101 et une semi-remorque 103 pouvant être reliée au véhicule tracteur par un système de liaison analogue au système de liaison décrit précédemment, l'ensemble formant un véhicule de catégorie utilitaire de type tracteur avec semi-remorque. Par rapport au premier mode de réalisation, le châssis 130 et la carrosserie 139 de la semi-remorque sont modifiés en amont de l'essieu porteur de manière à décaler le centre de gravité de la semi-remorque vers ledit essieu porteur, par exemple sensiblement au dessus dudit essieu porteur. La force d'appui verticale du timon de la remorque sur le dispositif d'attelage du véhicule tracteur devient ainsi négligeable par rapport au PTAC de la remorque.

En référence en particulier aux figures 8 et 9, le véhicule tracteur comprend comme précédemment un faux châssis 102 monté sur les deux longerons 111 du châssis 110 du véhicule. Le faux châssis porte derrière l'essieu arrière 113 du véhicule des moyens de maintien et de guidage 108 formés de rails 180, et en avant de l'essieu arrière 113 des moyens d'accrochage 104 formés d'une chape en U équipée d'une broche, et des moyens de maintien 106 formés de deux galets latéraux 160. Dans ce mode de réalisation les galets latéraux sont disposés entre les longerons 111 du châssis. Le faux châssis comprend deux poutres longitudinales 125 assemblées sur les barres longitudinales 121, devant l'essieu arrière, pour le montage d'une caisse 119 de forme parallélépipédique au-dessus des moyens d'accrochage 104. Au moins l'une des deux faces latérales de la caisse est ouverte et équipée d'une porte 119a à un ou deux battants.

La semi-remorque 103 comprend comme précédemment un châssis 130 avec deux longerons 131 reliés par des traverses. Le châssis est équipé d'un essieu 133 unique à bras tirés portant deux roues 138. Le châssis porte des moyens d'accrochage 105 formés un timon axial 150 de type télescopique monté sur les traverses, dont l'extrémité libre est munie d'un anneau 151 d'attelage. Le châssis porte également des moyens de maintien 107 formés de deux rails latéraux 170. Dans ce mode de réalisation, le timon s'étendant au delà de la traverse avant 132a du châssis. Les rails 170 sont montés aux extrémités de deux bras longitudinaux 171 fixés à la traverse avant 132a parallèlement au timon. Des entretoises de renfort 152 sont prévues entre le timon 150, les bras 171 et/ou la traverse avant 132a. Le châssis porte en outre des moyens de maintien et de guidage 109 formés d'un caisson 190 portant latéralement deux galets 192, et monté pivotant sur le châssis légèrement devant l'essieu 133 autour d'un axe transversal. Le châssis de la semi-remorque est équipé d'une caisse 139 analogue à celle du véhicule tracteur, accessible latéralement par une porte 139a.

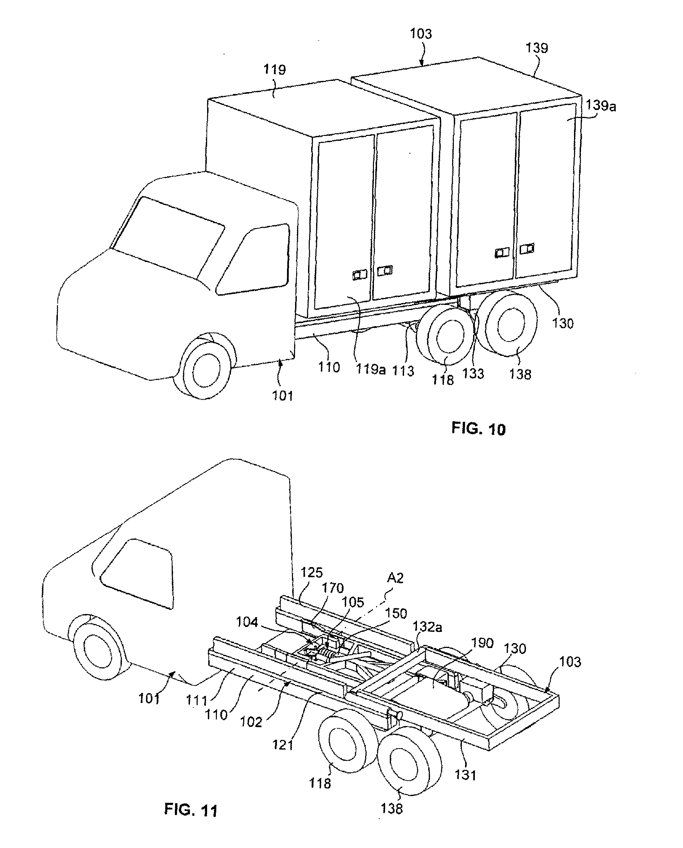

En référence aux figures 10 et 11, lors de l'accrochage de la semi-remorque, les rails 170 et le timon 150 passent entre les poutres longitudinales 125 du faux châssis, la partie arrière des longerons 111 du châssis et des barres longitudinales 121 du faux châssis passent sous la traverse avant 132a de la semi-remorque. Les galets 160 s'engagent dans les rails 170 et les galets 192 du caisson 190 s'engagent dans les rails 180, de sorte que, comme précédemment, les mouvements de la semi-remorque sont limités en permanence aux seuls mouvements de tangage autour de l'axe de tangage A2, passant par les axes des galets 160 et le point d'accrochage. En position accrochée, la traverse avant 132a est disposée à distance des extrémités arrière des poutres 125 et la paroi avant du caisson 139 de la semi-remorque est disposée à distance de la paroi arrière de la caisse 119 du véhicule tracteur, de sorte que le timon puisse coulisser lors d'une phase de freinage même en terrain non plat.

### Mode de réalisation N°3

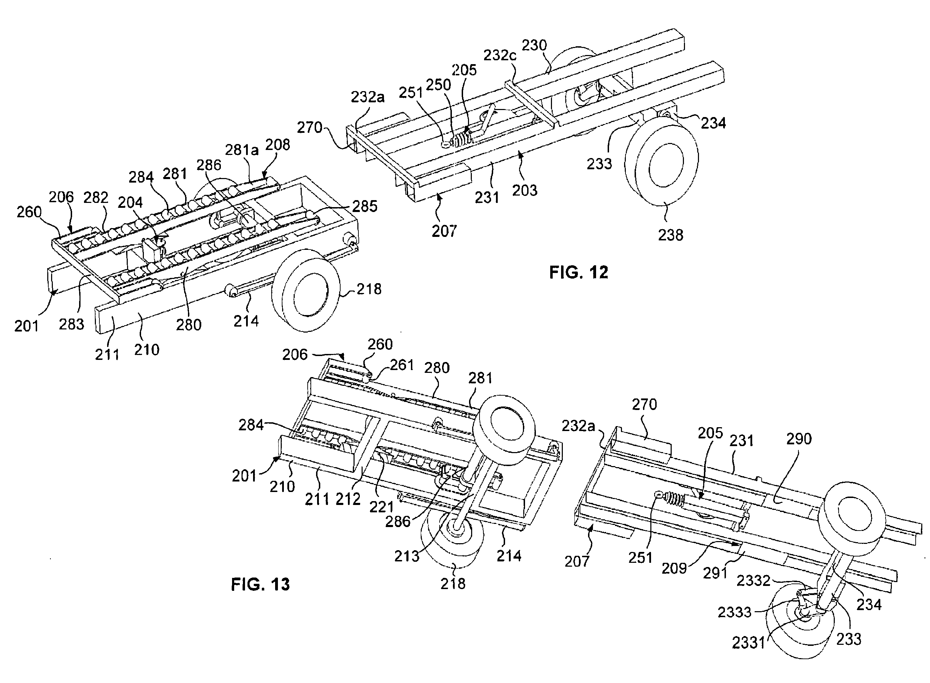

Les figures 12 à 15 illustrent un ensemble routier selon un troisième mode de réalisation comprenant un véhicule tracteur 201 et une semi-remorque 203 pouvant être reliée au véhicule tracteur par un système de liaison, l'ensemble formant un véhicule de catégorie utilitaire de type tracteur avec semi-remorque. La semi-remorque est une semi-remorque analogue à celle du premier mode de réalisation, son centre de gravité en charge étant situé en avant de son essieu porteur.

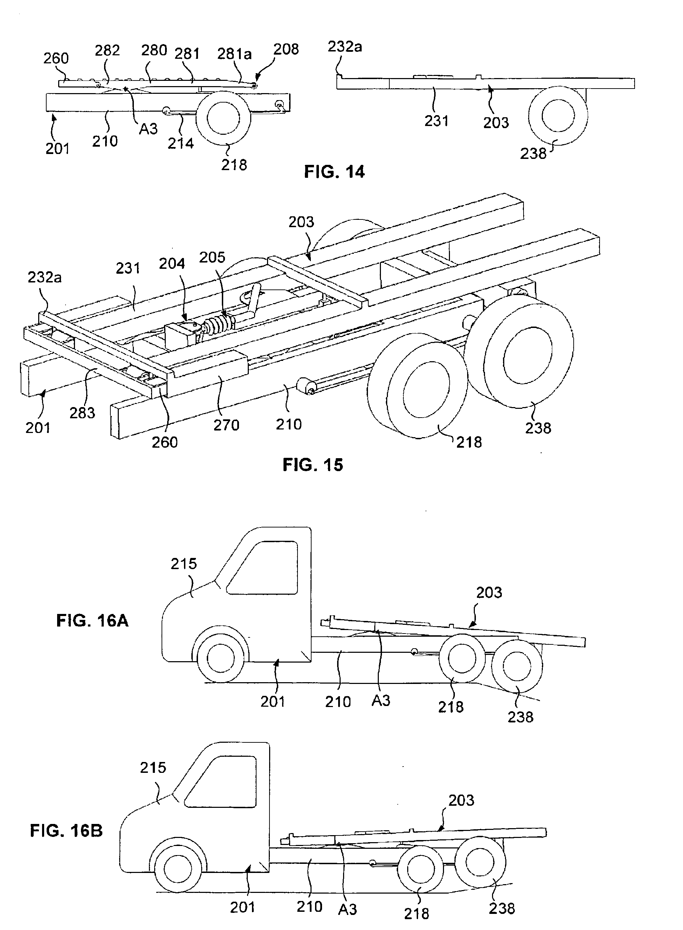

Le véhicule tracteur comprend un châssis 210 formés de deux longerons 211 reliés parallèlement entre eux par plusieurs traverses 212. Le châssis porte en partie arrière un essieu arrière 213 portant des roues arrière 218, et en partie avant, tel qu'illustré aux figures 16A et 16B, un essieu avant directionnel et une cabine 215. Le véhicule tracteur est par exemple formé à partir d'un châssis cabine classique d'un constructeur de PTAC inférieur ou égal à 3,5 T et de PTRA pouvant atteindre 9 T, dont l'essieu arrière est équipé d'un système de suspension à lames 214. Comme précédemment, le châssis présente un plan longitudinal de symétrie vertical (non représenté).

La semi-remorque 203 comprend un châssis 230, avec également un plan longitudinal de symétrie vertical (non représenté), comportant deux longerons 231 de section transversale en U, avec les branches du U orientées vers le bas, reliés parallèlement entre eux par leur base par plusieurs traverses 232, dont une traverse avant 232a reliant les extrémités avant des longerons. Le châssis est muni en partie arrière d'un essieu 233 unique équipé d'un système de suspension à barres de torsion, et en partie avant deux béquilles 237 latérales. L'essieu est assemblé sous les longerons par exemple au moyen d'une traverse 234. L'essieu 233 comprend de chaque côté un bras rigide longitudinal rigide 2331, appelé également bras de suspension, dont une extrémité est articulée par rapport au longeron selon un axe transversal sensiblement horizontal, et dont l'autre extrémité disposée vers l'avant de la semi-remorque, reçoit une flasque de freins montée mobile autour de l'axe de la roue 238. Par rapport à un essieu classique à bras tirés, l'essieu arrière 233 est monté sur le châssis de sorte que les bras 2331 s'étendent depuis l'axe de l'essieu vers l'avant de la semi-remorque, pour former un essieu inversé dit à bras poussés.

Avantageusement, l'essieu à bras poussés est doté d'un système anti-plongée comportant, de chaque côté une paire de bielles articulées entre elles selon un axe sensiblement parallèle à l'axe de la roue, une de ces bielles, la bielle supérieure 2332, étant articulée par rapport au longeron du châssis, l'autre bielle, la bielle inférieure 2333, étant fixée rigidement à la flasque.

L'utilisation d'un tel essieu est particulièrement intéressante car il permet de rapprocher les roues de la semi-remorque au plus près de l'essieu arrière du véhicule tracteur, malgré la présence du système de suspension à lames 214 qui s'étend derrière cet essieu arrière, de manière à limiter au maximum les phénomènes de ripage des pneumatiques lors des virages, sans dégrader le comportement dynamique de l'ensemble attelé.

Un autre avantage de l'utilisation d'un tel essieu concerne le freinage. En pratique, l'essieu se compose de chaque côté d'un parallélogramme déformable constitué par le bras de suspension articulé sur le longeron, les deux bielles articulées dont l'une est solidaire de la flasque mobile et le longeron du châssis. Chaque roue portée par cet essieu, est située en avant de l'articulation du bras de suspension par rapport au longeron. Lors des phases de freinage de la semi-remorque, le couple résistant transmis à la flasque mobile par l'intermédiaire des garnitures du frein provoque le relèvement du bras de suspension par rapport au châssis grâce à une géométrie judicieuse du parallélogramme et ainsi l'abaissement momentané du châssis de la semi-remorque. L'effet de délestage de l'arrière de la semi-remorque et par conséquent le transfert de masse sur le véhicule tracteur sont considérablement diminués augmentant d'autant l'efficacité et la stabilité du freinage.

Le dispositif d'attelage comprend comme précédemment des moyens d'accrochage 204 formés d'une chape en U équipée d'une broche, qui est montée sur le châssis du véhicule tracteur en amont de l'essieu arrière 213, et qui coopère avec des moyens d'accrochage 205 complémentaires de la semi-remorque formés d'un timon axial 250 de type télescopique monté entre les longerons via une traverse 232c. L'extrémité libre du timon est munie d'un anneau 251 d'attelage qui est disposé entre les deux longerons 231, en retrait par rapport à la traverse avant 232a.

Le châssis du véhicule tracteur est équipé de deux poutres longitudinales 280, chacune montée pivotante sur un longeron 211 autour d'un axe transversal passant sensiblement par l'axe de la broche et définissant l'axe de tangage A3 (Figure 14) de la semi-remorque, la semi-remorque étant apte à venir reposer sur les poutres par la base de ses longerons dans la position accrochée de la semi-remorque. Les reports de charge de la semi-remorque sur le véhicule tracteur se font sur cet axe de tangage. Celui-ci est placé en avant de l'essieu arrière du véhicule tracteur. Son positionnement longitudinal judicieux permet d'utiliser la capacité de charge maximale du véhicule tout en respectant les charges admissibles par essieu. Dans la plage de positionnement possible, l'axe de tangage est placé le plus en avant possible afin de limiter le porte-à-faux avant de la semi-remorque. Chaque poutre est formée de deux branches longitudinales entre lesquelles sont montés, en amont de l'essieu arrière 213, des rouleaux transversaux 284. Les rouleaux dépassent des bords supérieurs des branches de sorte que la semi-remorque vient en appui sur lesdits rouleaux 284 par les bases de ses longerons.

Pour chaque poutre, l'axe de tangage définit un bras ou tronçon, dit aval 281, et un bras ou tronçon, dit amont 282. Les extrémités des tronçons amont sont reliées par une traverse 283. Deux bras de maintien 260 longitudinaux sont montés sur la traverse 283 symétriquement de part et d'autre du plan longitudinal du châssis, en amont de l'axe de tangage, ces bras de maintien constituant des moyens de maintien 206 du dispositif d'attelage. Côté semi-remorque, les moyens de maintien 207 comprennent une paire de fourreaux de maintien 270 longitudinaux dans lesquels les bras longitudinaux 260 viennent s'engager dans la position accrochée. Ces deux fourreaux 270 sont montés sous la traverse avant 232a, symétriquement de part et d'autre du plan longitudinal, en amont de l'anneau d'accrochage 251. Chaque fourreau 270 est constitué d'un tube de section transversale rectangulaire. Chaque bras longitudinal 260 est également formé de deux branches parallèles, entre lesquelles sont montés au moins un rouleau transversal 261. Ce rouleau dépasse des bords inférieurs des branches de manière à rouler sur la paroi inférieure des fourreaux 270.

Les tronçons aval 281 des poutres s'étendent derrière l'essieu arrière 213 et forment des bras de maintien et de guidage qui constituent des moyens de maintien et de guidage 208. Les parties arrière 281a de ces bras de maintien et de guidage sont disposées derrière l'essieu arrière 213 et sont aptes à venir s'engager dans des moyens de maintien et de guidage de la semi-remorque 209 formés de fourreaux 290. Ces fourreaux sont constitués par un tronçon de longeron en U en amont de l'essieu 233 équipé d'une plaque 291 qui est fixée aux deux branches du longeron. Sur sa partie arrière 281a, chaque poutre est équipée d'au moins un rouleau transversal 285 dépassant des bords inférieurs des branches pour rouler sur les plaques 291 des fourreaux. En amont des parties arrière 281a, les deux poutres sont reliées au niveau de leur bord inférieur par une barre transversale anti-torsion 286.

Dans ce mode de réalisation, l'axe de pivotement des moyens de guidage et de maintien 208 est confondu avec l'axe de tangage A3. Chaque poutre 280 est par exemple montée pivotante sur un support 221 fixé au châssis, de préférence sur un faux châssis (non représenté) assemblé au châssis, sur lequel est également fixée la chape d'accrochage.

Lors de l'opération d'accrochage de la semi-remorque, les longerons 211 passent sous la traverse avant 232a, la semi-remorque roule sur les rouleaux 284, les bras de maintien 260 s'insèrent dans les fourreaux de maintien 270 tel qu'illustré à la figure 15, et les parties arrière 281a des bras de maintien et de guidage 281 s'insèrent dans les fourreaux 290 de maintien et de guidage.

Les figures 16A et 16B illustrent les mouvements de tangage de la semi-remorque autour de l'axe A3 de tangage dans le cas de terrains en pente.

### Mode de réalisation N°4

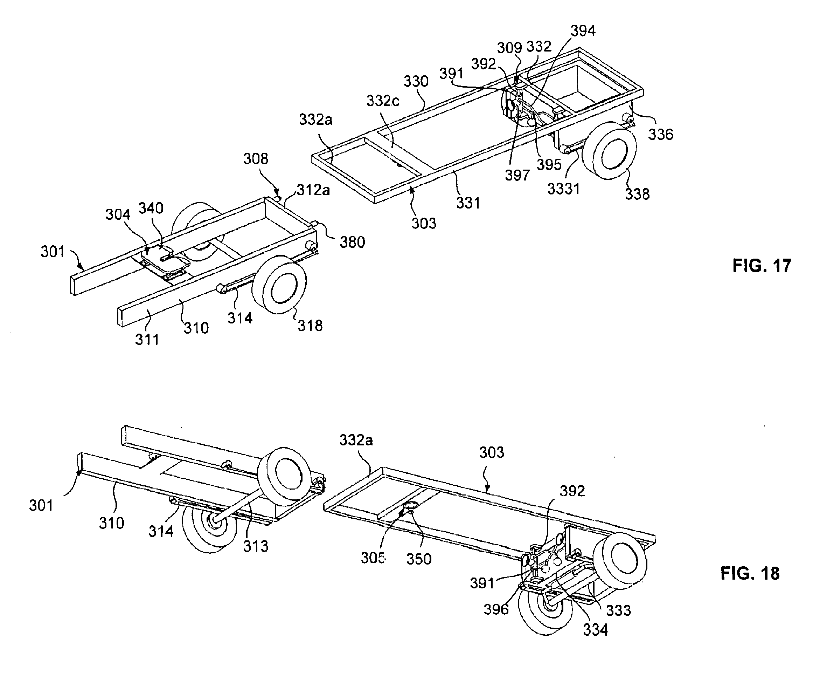

Les figures 17 à 20 illustrent un ensemble routier selon un quatrième mode de réalisation comprenant un véhicule tracteur 301 et une semi-remorque 303 pouvant être reliée au véhicule tracteur par un système de liaison, l'ensemble formant un véhicule de catégorie utilitaire de type tracteur avec semi-remorque.

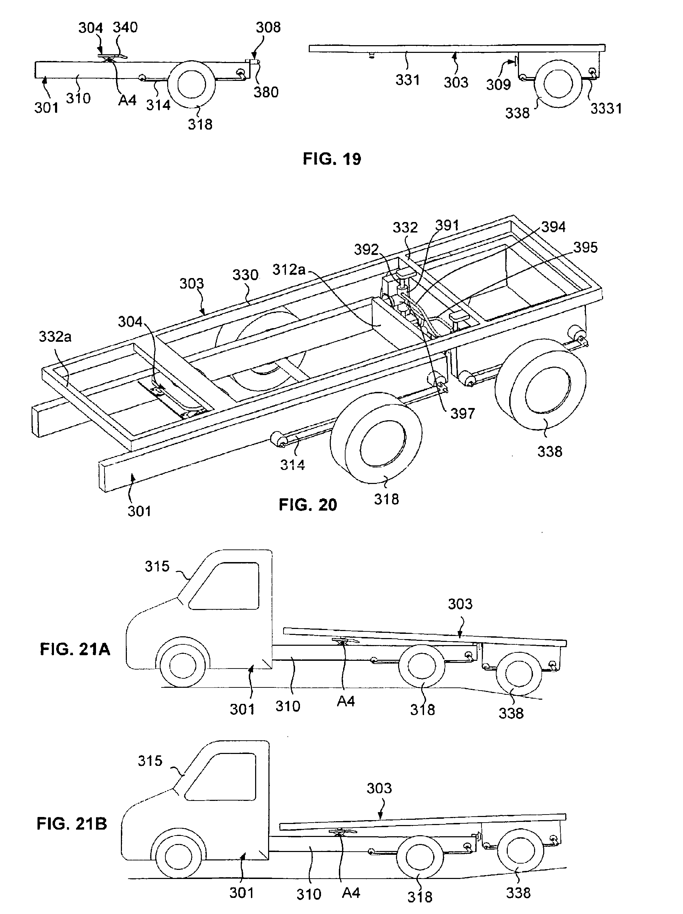

Le véhicule tracteur comprend un châssis 310 sensiblement identique à celui du troisième mode de réalisation. Le châssis présente un plan longitudinal de symétrie vertical (non représenté), et est formé de deux longerons 311 reliés parallèlement entre eux par plusieurs traverses. Le châssis porte en partie arrière un essieu arrière 313 portant des roues 318 et équipé d'un système de suspension à lames 314, et en partie avant, tel qu'illustré aux figures 21A et 21B, un essieu avant directionnel et une cabine 315. Le véhicule tracteur est par exemple formé à partir d'un châssis cabine classique d'un constructeur équipé de système de suspension à lames, de PTAC inférieur ou égal à 3,5 T et de PTRA pouvant atteindre 9 T.

La semi-remorque 303 comprend un châssis 330, avec également un plan longitudinal de symétrie vertical (non représenté), comprenant deux longerons 331 reliés parallèlement entre eux par plusieurs traverses 332, dont une traverse avant 332a. Le châssis est muni en partie arrière d'un essieu directionnel passif 333, également appelé essieu suiveur, équipé d'un système de suspension à lames 3331. L'entraxe entre l'essieu arrière du véhicule tracteur et l'essieu de la semi-remorque peut donc être plus important, dans ce mode de réalisation, le ripage des pneumatiques étant limité par le braquage des roues de la semi-remorque. L'essieu est assemblé au bord inférieur de deux barres longitudinales 336 qui sont montées sous les longerons et reliées entre elles par des traverses 334.

Les moyens d'accrochage 304 comprennent côté véhicule tracteur une sellette 340 basculante d'accouplement, connue en soi, coopérant avec des moyens d'accrochage 305 de la semi-remorque constitués d'un pivot 350 d'accouplement fixé sous une traverse 332c du châssis 330. La sellette est montée par sa base sur le châssis 301, selon le plan longitudinal du châssis, en avant de l'essieu arrière 313. L'axe transversal de basculement de la sellette définit l'axe de tangage A4 (figure 19) de la semi-remorque. Dans ce mode de réalisation, la semi-remorque est équipée d'un système de freinage pneumatique.

Les moyens de maintien et de guidage 309 comprennent deux vérins 391, par exemple hydrauliques, montés verticalement et symétriquement de part et d'autre du plan longitudinal de la semi-remorque, en amont de l'essieu 333. Chaque vérin comprend un cylindre dans lequel est monté coulissant un piston équipé d'une tige 392. Le cylindre est formé d'un tube creux fermé par des parois d'extrémité. La tige du piston traverse lesdites parois d'extrémité, et le vérin est fixé au châssis par les extrémités libres de sa tige, par exemple à la traverse 334. Le piston monté coulissant dans le cylindre définit une chambre supérieure et une chambre inférieure. La chambre supérieure d'un premier vérin est reliée par une première conduite 394 à la chambre inférieure du deuxième vérin, et la chambre inférieure du premier vérin est reliée par une deuxième conduite 395 à la chambre supérieure du deuxième vérin. Pour encaisser de brusques surpressions, chaque conduite est équipée d'une sphère 396. Chaque cylindre est équipé extérieurement d'un tube 397 s'étendant vers l'avant et muni en extrémité d'un cône de guidage.

Côté véhicule tracteur, les moyens de maintien et de guidage 308 comprennent deux plots cylindriques 380 disposés sur le châssis, derrière l'essieu arrière 313, symétriquement de part et d'autre du plan longitudinal du véhicule tracteur. Les plots s'étendent longitudinalement vers l'arrière, et sont par exemple montés sur une traverse arrière 312a du châssis reliant les extrémités arrière des longerons. Les plots 380 sont aptes à venir s'engager dans les tubes 397, les cônes servant à guider lesdits plots dans les tubes lors de l'opération d'accrochage.

Les plots engagés dans les tubes 397 des vérins assurent le maintien de la semi-remorque dans l'axe de la semi-remorque. La liaison croisée des chambres par les conduites 394, 395 bloque les mouvements de roulis de la semi-remorque et permet de contrôler les mouvements de tangage autour de l'axe A4.

Les figures 21A et 21B illustrent les mouvements de tangage de la semi-remorque autour de l'axe A4 de tangage dans le cas de terrains en pente. Lors de ces mouvements de tangage, les deux cylindres 391 coulissent ensemble vers le bas ou vers le haut le long des tiges 392, et les plots coulissent dans les tubes 397 tout en restant au moins partiellement engagés dans ces derniers.

### Mode de réalisation N°5

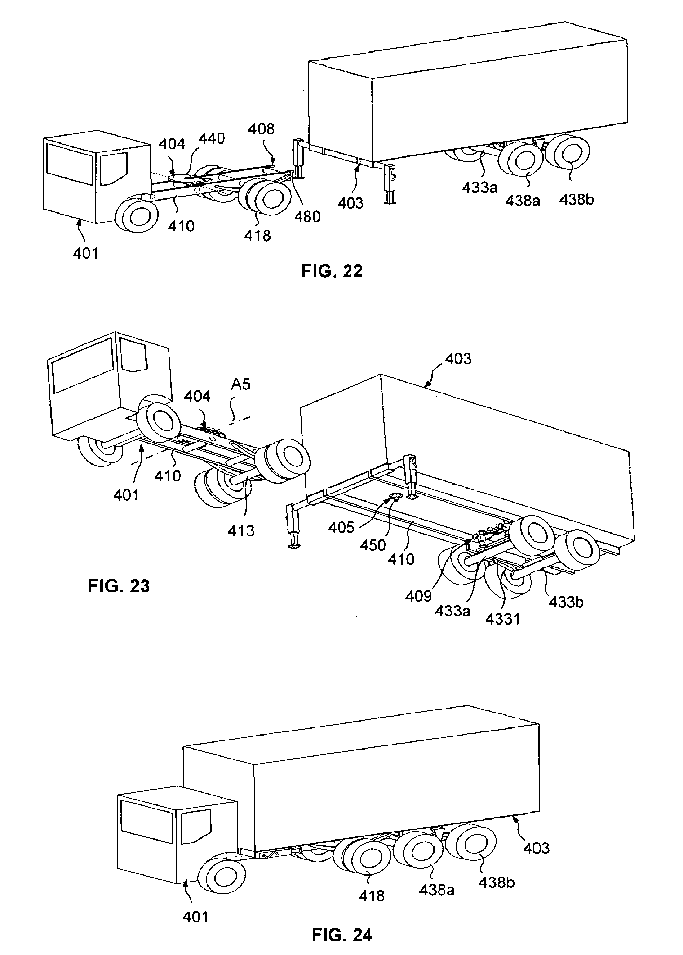

Les figures 22 à 24 illustrent un ensemble routier selon un cinquième mode de réalisation comprenant un véhicule tracteur 401 et une semi-remorque 403 pouvant être reliée au véhicule tracteur par un système de liaison analogue au système de liaison décrit dans le quatrième mode de réalisation. Par rapport au quatrième mode de réalisation, l'ensemble forme un véhicule de catégorie poids lourd de type tracteur avec semi-remorque. Le véhicule tracteur a un PTAC, par exemple de 19T, pour un PTRA de 40T, et le châssis 430 de la semi-remorque comprend deux essieux, en particulier un premier essieu 433a et un second essieu suiveur 433b portant respectivement des roues 438a et 438b.

La semi-remorque est équipée d'un système de suspension à lames 4331, d'un système de freinage pneumatique, et d'un pivot 450 d'accouplement comme moyens d'accrochage 405. Les moyens d'accrochage 404 comprennent côté véhicule tracteur une sellette 440 basculante d'accouplement montée sur le châssis 410, dont l'axe transversal de basculement définit l'axe de tangage A5 de la semi-remorque. Comme dans le mode de réalisation N°4, les moyens de maintien et de guidage 409 de la semi-remorque comprennent, un système à deux vérins en amont du premier essieu 433a. Côté véhicule tracteur, les moyens de maintien et de guidage 408 comprennent deux plots cylindriques 480, montés derrière l'essieu arrière 413 portant les roues arrière 418, aptes à venir s'engager dans des tubes des vérins pour bloquer les mouvements de roulis et contrôler les mouvements de tangage autour de l'axe A5.

Selon un autre mode de réalisation, le dispositif de maintien et de guidage agit devant l'essieu arrière du véhicule tracteur. A titre d'exemple, le dispositif comprend comme dans le premier mode de réalisation un caisson qui est monté pivotant sur le châssis de la remorque et muni de galets aptes à venir s'engager dans des rails montés sur le châssis du véhicule tracteur, lesdits rails étant cette fois-ci montés devant l'essieu arrière du véhicule tracteur.

Selon un autre mode de réalisation, le dispositif de maintien et de guidage agit derrière l'essieu de la semi-remorque. A titre d'exemple, le dispositif comprend un caisson qui est monté pivotant sur le châssis du véhicule tracteur, et muni de galets aptes à venir s'engager dans des rails montés sur le châssis de la semi-remorque, lesdits rails étant montés derrière l'essieu de la semi-remorque.

## Revendications

1. Ensemble routier comprenant un véhicule tracteur (1, 101, 201, 301, 401), une semi-remorque (3, 103, 203, 303, 403) et un système de liaison entre ledit véhicule tracteur et la semi-remorque, ledit système de liaison comprenant un dispositif d'attelage comprenant des moyens d'accrochage (4, 104, 204, 304, 404) montés sur le châssis (10, 110, 210, 310, 410) du véhicule tracteur, en avant de l'essieu arrière (13, 113, 213, 313, 413), aptes à coopérer avec des moyens d'accrochage (5, 105, 205, 305, 405) complémentaires de la semi-remorque pour accrocher la semi-remorque au véhicule tracteur dans une position dite accrochée de la semi-remorque, de sorte que la semi-remorque soit articulée sur le véhicule tracteur au moins autour d'un axe transversal de tangage (A1, A2, A3, A4, A5) sensiblement horizontal en avant de l'essieu arrière du véhicule tracteur, ledit système de liaison comprenant en outre un dispositif de maintien et de guidage comprenant des moyens de maintien et de guidage (9, 109, 208, 309, 409) montés sur un premier élément parmi la semi-remorque et le véhicule tracteur, aptes à coopérer dans la position accrochée de la semi-remorque, avec des moyens de maintien et de guidage (8, 108, 209, 308, 408) complémentaires montés sur le deuxième élément pour d'une part maintenir de manière permanente les plans longitudinaux verticaux (P1, P2) du véhicule tracteur et de la semi-remorque sensiblement confondus lors de la conduite sur route, et, d'autre part, guider de manière permanente le pivotement de la semi-remorque autour dudit axe transversal (A1, A2 A3, A4, A5), **caractérisé en ce que** la semi-remorque (3, 103, 203) comprend au moins un timon d'attelage (50, 150, 250) équipé à son extrémité libre desdits moyens d'accrochage complémentaires (51, 151, 251).

2. Ensemble routier selon la revendication 1, **caractérisé en ce que** ledit timon d'attelage (50, 150, 250) est de type télescopique à freinage par inertie.

3. Ensemble routier selon la revendication 1 ou 2, **caractérisé en ce que**, dans la position accrochée de la semi-remorque, lesdits moyens de maintien et de guidage (9, 109, 208, 309, 409) sont aptes à coopérer, sensiblement entre l'essieu arrière (13, 113, 213, 313, 413) du véhicule tracteur et l'essieu avant (33, 133, 233, 333, 433a), avec lesdits moyens de maintien et de guidage (8, 108, 209, 308, 408) complémentaires pour maintenir les plans longitudinaux verticaux (P1, P2) sensiblement confondus et guider le pivotement de la semi-remorque autour dudit axe transversal (A1, A2 A3, A4, A5).

4. Ensemble routier selon l'une des revendications 1 à 3, **caractérisé en ce que** les moyens de maintien et de guidage (9, 109, 208) comprennent un support (90, 190, 280) monté pivotant, autour d'un premier axe transversal (A'1, A3) sensiblement horizontal sur le premier élément, et portant au moins un organe (92, 192, 281a) de maintien et de guidage décalé longitudinalement par rapport audit premier axe transversal, les moyens de maintien et de guidage complémentaires (8, 108, 209) comprenant au moins une glissière longitudinale (80, 180, 290) fixée au deuxième élément dans laquelle ledit organe est apte à coulisser dans la position accrochée de la semi-remorque.

5. Ensemble routier selon la revendication 4, **caractérisé en ce que** ledit support (90, 190) porte deux organes formés de deux galets (92, 192) montés rotatifs autour d'un second axe transversal (A"1, A"2) parallèle au premier axe transversal (A'1, A'2) et décalé longitudinalement par rapport à ce dernier, les deux galets étant aptes à venir s'engager dans lesdits moyens de maintien et de guidage complémentaires (8, 108) formés de deux rails (80, 180) de section transversale en U montées en vis-à-vis, symétriquement de part et d'autre du plan longitudinal du deuxième élément.

6. Ensemble routier selon la revendication 5, **caractérisé en ce que** le support (90, 190) portant les galets (92, 192) est monté pivotant sur le châssis (30, 130) de la semi-remorque (1, 101), de sorte que le second axe transversal (A" 1, A"2) de rotation des galets soit disposé en amont du premier essieu (33, 133) de la semi-remorque, les rails (80, 180) étant montés fixes sur la partie arrière du châssis du véhicule tracteur, en aval de l'essieu arrière (13, 113).

7. Ensemble routier selon la revendication 4, **caractérisé en ce que** ledit support (280) comprend deux bras (281) montés pivotant symétriquement de part et d'autre du plan longitudinal du premier élément autour du premier axe transversal (A3), les parties d'extrémité (281a) des bras constituant deux organes aptes à venir s'engager dans lesdits moyens de maintien et de guidage complémentaires (209) formés de deux fourreaux (290) de section transversale fermée montés fixes symétriquement de part et d'autre du plan longitudinal du deuxième élément.

8. Ensemble routier selon l'une des revendications 1 à 3, **caractérisé en ce que** les moyens de maintien et de guidage (309, 409) comprennent deux vérins (391) montés sensiblement verticalement, symétriquement de part et d'autre du plan longitudinal du premier élément, chaque vérin comprenant un cylindre, un piston monté coulissant dans ledit cylindre et définissant une chambre supérieure et une chambre inférieure, une tige (392) de piston traversant de manière étanche ledit cylindre de chaque côté et présentant deux extrémités libres par lesquelles ledit vérin est fixé audit premier élément, les chambres supérieure et inférieure d'un premier vérin étant en communication fluidique respectivement avec les chambres inférieure et supérieure du deuxième vérin, chaque cylindre portant extérieurement un tube longitudinal (397), lesdits moyens de maintien et de guidage (308, 408) complémentaires comprenant deux plots (380) longitudinaux montés fixes sur le deuxième élément et symétriquement de part et d'autre de son plan longitudinal, lesdits plots étant aptes à s'engager et à coulisser dans lesdits tubes longitudinaux.

9. Ensemble routier selon l'une des revendications 1 à 8, **caractérisé en ce que** la semi-remorque (203) comprend un châssis (230) équipé d'un essieu (233) à bras poussés, comprenant de chaque côté un bras de suspension (2331) dont une première extrémité est articulée par rapport au châssis selon un axe transversal sensiblement horizontal, et dont la deuxième extrémité disposée vers l'avant de la semi-remorque, porte au moins une roue (238).

10. Ensemble routier selon la revendication 1 à 9, **caractérisé en ce que** le dispositif d'attelage comprend en outre des moyens de maintien et de guidage (6, 106, 206), montés sur un premier élément parmi le châssis (30, 130, 230) de la semi-remorque (3, 103, 203), sur la partie amont du châssis de la semi-remorque, et le châssis (10, 110, 210) du véhicule tracteur (1, 101 , 201) en amont de l'essieu arrière (13, 113, 213) du véhicule tracteur, aptes à coopérer avec des moyens de maintien et de guidage (7, 107, 207) complémentaires de l'autre élément lorsque la semi-remorque est en position accrochée, pour maintenir, en amont de l'essieu arrière (13, 113, 213) du véhicule tracteur, les plans longitudinaux verticaux (P1, P2) du véhicule tracteur et de la semi-remorque sensiblement confondus entre eux et transmettre au châssis du véhicule tracteur la charge constituée par la partie avant de la semi-remorque.

11. Ensemble routier selon la revendication 10, **caractérisé en ce que** les moyens de maintien et de guidage (7, 107) comprennent deux glissières (70, 170) de section transversale en U montées en vis-à-vis, symétriquement de part et d'autre du plan longitudinal (P1 ou P2) du premier élément, et les moyens de maintien et de guidage complémentaires (6, 106) comprennent deux galets (60, 160) montés rotatifs autour d'un axe transversal de rotation symétriquement de part et d'autre du plan longitudinal vertical du deuxième élément (P1 ou P2), lesdits galets étant aptes à venir coulisser dans lesdites glissières et leur axe transversal de rotation étant sensiblement aligné transversalement avec l'axe de tangage (A1, A2) dans la position accrochée de la semi-remorque.

12. Ensemble routier selon la revendication 10, **caractérisé en ce que** les moyens de maintien et de guidage du dispositif d'attelage comprennent au moins deux fourreaux (270) longitudinaux de section transversale fermée montés symétriquement de part et d'autre du plan longitudinal du premier élément, et les moyens de maintien et de guidage complémentaires comprennent au moins deux bras longitudinaux (260), les dits bras étant montés pivotant autour d'un axe transversal de rotation symétriquement de part et d'autre du plan longitudinal vertical du deuxième élément, les parties d'extrémité des bras constituant deux organes (206) aptes à venir s'engager dans lesdits fourreaux, les dits bras ayant leur axe transversal de rotation étant sensiblement alignés avec l'axe de tangage (A3) dans la position accrochée de la semi-remorque.

13. Ensemble routier selon l'une des revendications 1 à 12, **caractérisé en ce que** le centre de gravité en charge de la semi-remorque (103) est situé sensiblement au-dessus de son ou ses essieux porteurs (133).

14. Ensemble routier selon l'une des revendications 1 à 12, **caractérisé en ce que** le centre de gravité en charge de la semi-remorque (2, 203, 303, 403) est situé en avant de son ou ses essieux porteurs (33, 233, 333, 433a, 433b).

## Claims

1. Tractor and trailer combination comprising a tractor vehicle (1, 101, 201, 301, 401), a semi-trailer (3, 103, 203, 303, 403) and a connecting system between said tractor vehicle and the semi-trailer, said connecting system comprising a hitch device comprising coupling means (4, 104, 204, 304, 404), mounted on the chassis (10, 110, 210, 310, 410) of the tractor vehicle, in front of the rear axle (13, 113, 213, 313, 413), and adapted to interact with complementary coupling means (5, 105, 205, 305, 405) of the semi-trailer in order to couple the semi-trailer to the tractor vehicle in what is known as the coupled position of the semi-trailer, in such a way that the semi-trailer pivots on the tractor vehicle at least about a substantially horizontal transverse pitch axis (A1, A2, A3, A4, A5) in front of the rear axle of the tractor vehicle, said connecting system additionally comprising a retaining and guiding device comprising retaining and guiding means (9, 109, 208, 309, 409) mounted on a first element of the semi-trailer and tractor vehicle combination, adapted to interact, in the coupled position of the trailer, with complementary retaining and guiding means (8, 108, 209, 308, 408) mounted on the second element, in order to keep the vertical longitudinal planes (P1, P2) of the tractor vehicle and semi-trailer substantially coincident at all times during travel on the road, while also constantly guiding the pivoting of the semi-trailer about said transverse axis (A1, A2, A3, A4, A5), **characterized in that** the semi-trailer (3, 103, 203) comprises at least one drawbar (50, 150, 250) fitted at its free end with said complementary coupling means (51, 151, 251).

2. Tractor and trailer combination according to Claim 1, **characterized in that** said drawbar (50, 150, 250) is of a telescopic type with inertia braking.

3. Tractor and trailer combination according to Claim 1 or 2, **characterized in that**, in the coupled position of the semi-trailer, said retaining and guiding means (9, 109, 208, 309, 409) are adapted to interact, substantially between the rear axle (13, 113, 213, 313, 413) of the tractor vehicle and its front axle (33, 133, 233, 333, 433a), with said complementary retaining and guiding means (8, 108, 209, 308, 408), in order to keep the vertical longitudinal planes (P1, P2) substantially coincident and guide the pivoting of the semi-trailer about said transverse axis (A1, A2, A3, A4, A5).

4. Tractor and trailer combination according to any one of Claims 1 to 3, **characterized in that** the retaining and guiding means (9, 109, 208) comprise a support (90, 190, 280) mounted pivotably about a first, substantially horizontal, transverse axis (A'1, A3) on the first element, and having at least one retaining and guiding member (92, 192, 281a) offset longitudinally with respect to said first transverse axis, the complementary retaining and guiding means (8, 108, 209) comprising at least one longitudinal guide (80, 180, 290) fixed to the second element, in which said member can slide in the coupled position of the semi-trailer.

5. Tractor and trailer combination according to Claim 4, **characterized in that** said support (90, 190) has two members formed by two rollers (92, 192) mounted rotatably about a second transverse axis (A"1, A"2) parallel to the first transverse axis (A'1, A'2) offset longitudinally with respect to the latter, the two rollers being adapted to engage in said complementary retaining and guiding means (8, 108) formed by two rails (80, 180) which have U-shaped transverse cross sections and which are mounted so as to face each other symmetrically on either side of the longitudinal plane of the second element.

6. Tractor and trailer combination according to Claim 5, **characterized in that** the support (90, 190) having the rollers (92, 192) is mounted pivotably on the chassis (30, 130) of the semi-trailer (1, 101), in such a way that the second transverse axis (A"1, A"2) of rotation of the rollers is positioned ahead of the first axle (33, 133) of the semi-trailer, the rails (80, 180) being mounted on and fixed to the rear part of the chassis of the tractor vehicle behind the rear axle (13, 113).

7. Tractor and trailer combination according to Claim 4, **characterized in that** said support (280) comprises two arms (281) mounted pivotably and symmetrically on either side of the first element about the first transverse axis (A3), the end parts (281a) of the arms forming two members adapted to engage in said complementary retaining and guiding means (209) formed by two sheaths (290) having closed transverse cross sections, mounted and fixed symmetrically on either side of the longitudinal plane of the second element.

8. Tractor and trailer combination according to any one of Claims 1 to 3, **characterized in that** the retaining and guiding means (309, 409) comprise two actuators (391) mounted substantially vertically and symmetrically on either side of the longitudinal plane of the first element, each actuator comprising a cylinder and a piston mounted slidably in said cylinder, and forming an upper chamber and a lower chamber, a piston rod (392) passing through each end of said cylinder in a sealed way and having two free ends by means of which said actuator is fixed to said first element, the upper and lower chambers of a first actuator being in fluid communication with the lower and upper chambers, respectively, of the second actuator, each cylinder having an external longitudinal tube (397), said complementary retaining and guiding means (308, 408) comprising two longitudinal pins (380) mounted on and fixed to the second element in a symmetrical way on either side of its longitudinal plane, said pins being adapted to engage and slide in said longitudinal tubes.

9. Tractor and trailer combination according to any one of Claims 1 to 8, **characterized in that** the semi-trailer (203) comprises a chassis (230) equipped with an axle (233) having thrust arms, comprising on each side a suspension arm (2331) having a first end pivoted with respect to the chassis about a substantially horizontal transverse axis, and having a second end positioned towards the front of the semi-trailer and carrying at least one wheel (238).

10. Tractor and trailer combination according to Claims 1 to 9, **characterized in that** the coupling device additionally comprises retaining and guiding means (6, 106, 206), mounted on a first element of the combination formed by the leading part of the chassis (30, 130, 230) of the semi-trailer (3, 103, 203) and the part of the chassis (10, 110, 210) of the tractor vehicle (1, 101, 201) in front of the rear axle (13, 113, 213) of the tractor vehicle, and adapted to interact with complementary retaining and guiding means (7, 107, 207) on the other element when the semi-trailer is in the coupled position, in order to keep the vertical longitudinal planes (P1, P2) of the tractor vehicle and of the semi-trailer substantially coincident in front of the rear axle (13, 113, 213) of the tractor vehicle, and in order to transmit the load formed by the front part of the semi-trailer to the tractor vehicle.

11. Tractor and trailer combination according to Claim 10, **characterized in that** the retaining and guiding means (7, 107) comprise two guides (70, 170) with U-shaped cross sections, mounted so as to face each other symmetrically on either side of the longitudinal plane (P1 or P2) of the first element, while the complementary retaining and guiding means (6, 106) comprise two rollers (60, 160) mounted rotatably about a transverse axis of rotation and symmetrically on either side of the vertical longitudinal plane of the second element (P1 or P2), said rollers being adapted to slide in said guides and their transverse axis of rotation being substantially aligned transversely with the pitch axis (A1, A2) in the coupled position of the semi-trailer.

12. Tractor and trailer combination according to Claim 10, **characterized in that** the retaining and guiding means of the coupling device comprise at least two longitudinal sheaths (270) with closed cross sections, mounted symmetrically on either side of the longitudinal plane of the first element, while the complementary retaining and guiding means comprise at least two longitudinal arms (260), said arms being mounted pivotably about a transverse axis of rotation and symmetrically on either side of the vertical longitudinal plane of the second element, the end parts of the arms forming two members (206) adapted to engage in said sheaths, said arms having their transverse axis of rotation substantially aligned with the pitch axis (A3) in the coupled position of the semi-trailer.

13. Tractor and trailer combination according to any one of Claims 1 to 12, **characterized in that** the load centre of gravity of the semi-trailer (103) is substantially above its carrying axle or axles (133).

14. Tractor and trailer combination according to any one of Claims 1 to 12, **characterized in that** the load centre of gravity of the semi-trailer (2, 203, 303, 403) is substantially in front of its carrying axle or axles (33, 233, 333, 433a, 433b).

## Patentansprüche

1. Straßenlastfahrzeug mit einer Zugmaschine (1, 101, 201, 301, 401), einem Sattelauflieger (3, 103, 203, 303, 403) und einem Verbindungssystem zwischen der Zugmaschine und dem Sattelauflieger, wobei das Verbindungssystem eine Kupplungsvorrichtung mit Anhängemitteln (4, 104, 204, 304, 404) aufweist, die der Hinterachse (13, 113, 213, 313, 413) vorgelagert am Fahrgestell (10, 110, 210, 310, 410) der Zugmaschine montiert sind und mit komplementär ausgebildeten Anhängemitteln (5, 105, 205, 305, 405) des Sattelaufliegers zusammenwirken können, um den Sattelauflieger in einer sogenannten Sattelauflieger-Anhängestellung an die Zugmaschine anzuhängen, so dass der Sattelauflieger zumindest um eine im wesentlichen horizontale, quer verlaufende Nickachse (A1, A2, A3, A4, A5) vor der Hinterachse an die Zugmaschine angelenkt ist, wobei das Verbindungssystem ferner eine Halte- und Führungsvorrichtung mit Halte- und Führungsmitteln (9, 109, 208, 309, 409) aufweist, die an einem ersten Teil aus Sattelauflieger und aus Zugmaschine montiert sind und in der Sattelauflieger-Anhängestellung mit komplementär ausgebildeten Halte- und Führungsmitteln (8, 108, 209, 308, 408) zusammenwirken können, die am zweiten Teil montiert sind, um einerseits die senkrecht verlaufenden Längsebenen (P1, P2) der Zugmaschine und des Sattelaufliegers beim Fahren auf der Straße stetig beieinander zu halten und um andererseits die Schwenkbewegung des Sattelaufliegers um die Querachse (A1, A2, A3, A4, A5) stetig zu führen, **dadurch gekennzeichnet, dass** der Sattelauflieger (3, 103, 203) zumindest eine Kupplungsdeichsel (50, 150, 250) aufweist, die an ihrem freien Ende mit den komplementär ausgebildeten Anhängemitteln (51, 151, 251) versehen ist.

2. Straßenlastfahrzeug nach Anspruch 1, **dadurch gekennzeichnet, dass** die Kupplungsdeichsel (50, 150, 250) teleskopartig mit Auflaufbremsung ausgeführt ist.

3. Straßenlastfahrzeug nach Anspruch 1 oder 2, **dadurch gekennzeichnet, dass** in der Sattelauflieger-Anhängestellung die Halte- und Führungsmittel (9, 109, 208, 309, 409) im wesentlichen zwischen der Hinterachse (13, 113, 213, 313, 413) der Zugmaschine und der Vorderachse (33, 133, 233, 333, 433a) mit den komplementär ausgebildeten Halte- und Führungsmitteln (8, 108, 209, 308, 408) zusammenwirken können, um die senkrecht verlaufenden Längsebenen (P1, P2) im wesentlichen beieinander zu halten und die Schwenkbewegung des Sattelaufliegers um die Querachse (A1, A2, A3 A4, A5) zu führen.

4. Straßenlastfahrzeug nach einem der Ansprüche 1 bis 3, **dadurch gekennzeichnet, dass** die Halte- und Führungsmittel (9, 109, 208) einen Träger (90, 190, 280) aufweisen, der um eine im wesentlichen horizontal verlaufende erste Querachse (A'1, A3) verschwenkbar am ersten Teil montiert ist und zumindest ein Halte- und Führungsglied (92, 192, 281a) trägt, das longitudinal zur ersten Achse versetzt liegt, wobei die komplementär ausgebildeten Halte- und Führungsmittel (8, 108, 209) zumindest eine Längsgleitschiene (80, 180, 290) aufweisen, die am zweiten Teil befestigt ist und in welcher das Glied in Sattelauflieger-Anhängestellung gleiten kann.

5. Straßenlastfahrzeug nach Anspruch 4, **dadurch gekennzeichnet, dass** der Träger (90, 190) zwei Glieder trägt, die aus zwei Rollen (92, 192) gebildet sind, die um eine zweite Querachse (A"1, A"2) drehbar gelagert sind, welche parallel zur ersten Querachse (A'1, A'2) verläuft und longitudinal zur letztgenannten versetzt ist, wobei die beiden Rollen in die komplementär ausgeführten Halte- und Führungsmittel (8, 108) eingreifen können, die aus zwei Schienen (80, 180) mit U-förmigem Querschnitt gebildet sind, welche symmetrisch beiderseits der Längsebene des zweiten Teils einander gegenüberliegend montiert sind.

6. Straßenlastfahrzeug nach Anspruch 5, **dadurch gekennzeichnet, dass** der die Rollen (92, 192) tragende Träger (90, 190) am Fahrgestell (30, 130) des Sattelaufliegers (1, 101) verschwenkbar gelagert ist, so dass die zweite quer verlaufende Drehachse (A"1, A"2) der Rollen der ersten Achse (33, 133) des Sattelaufliegers vorgelagert angeordnet ist, wobei die Schienen (80, 180) fest am hinteren Abschnitt des Fahrgestells der Zugmaschine - der Hinterachse (13, 113) nachgelagert - montiert sind.

7. Straßenlastfahrzeug nach Anspruch 4, **dadurch gekennzeichnet, dass** der Träger (280) zwei Lenker (281) aufweist, die um die erste Querachse (A3) verschwenkbar symmetrisch beiderseits der Längsebene des ersten Teils gelagert sind, wobei die Endabschnitte (281 a) der Lenker zwei Glieder bilden, die in die komplementär ausgebildeten Halte- und Führungsmittel (209) eingreifen können, die aus zwei Buchsen (290) mit geschlossenem Querschnitt gebildet sind, die symmetrisch beiderseits der Längsebene des zweiten Teils fest montiert sind.

8. Straßenlastfahrzeug nach einem der Ansprüche 1 bis 3, **dadurch gekennzeichnet, dass** die Halte- und Führungsmittel (309, 409) zwei Kraftzylinder (391) aufweisen, die im wesentlichen senkrecht und symmetrisch beiderseits der Längsebene des ersten Teils montiert sind, wobei jeder Kraftzylinder einen Zylindermantel, einen im Zylindermantel gleitbeweglich gelagerten und eine obere Kammer und eine untere Kammer definierenden Kolben sowie eine auf jeder Seite in dichter Weise durch den Zylindermantel tretende Kolbenstange (392) aufweist, die zwei freie Enden aufweist, über die der Kraftzylinder am ersten Teil befestigt ist, wobei die obere bzw. die untere Kammer eines ersten Kraftzylinders in Fluidverbindung mit der unteren bzw. oberen Kammer des zweiten Kraftzylinders steht, wobei jeder Zylindermantel außen ein Längsrohr (397) trägt, wobei die komplementär ausgeführten Halte- und Führungsmittel (308, 408) zwei Längszapfen (380) aufweisen, die fest am zweiten Teil symmetrisch beiderseits seiner Längsebene montiert sind, wobei die Zapfen in die Längsrohre eingreifen und darin gleiten können.

9. Straßenlastfahrzeug nach einem der Ansprüche 1 bis 8, **dadurch gekennzeichnet, dass** der Sattelauflieger (203) ein Fahrgestell (230) aufweist, das mit einer Achse (233) mit geschobenen Lenkern versehen ist, die auf jeder Seite einen Querlenker (2331) aufweist, von dem ein erstes Ende entlang einer im wesentlichen horizontal verlaufenden Querachse bezüglich des Fahrgestells angelenkt ist, und von dem das zweite Ende, das zur Vorderseite des Sattelaufliegers hin angeordnet ist, zumindest ein Rad (238) trägt.

10. Straßenlastfahrzeug nach Anspruch 1 bis 9, **dadurch gekennzeichnet, dass** die Kupplungsvorrichtung ferner Halte- und Führungsmittel (6, 106, 206) aufweist, die an einem ersten Teil aus Fahrgestell (30, 130, 230) des Sattelaufliegers (3, 103, 203) an dem vorderen Abschnitt des Fahrgestells des Sattelaufliegers und aus Fahrgestell (10, 110, 210) der Zugmaschine (1, 101, 201) vor der Hinterachse (13, 113, 213) der Zugmaschine montiert sind, die mit komplementär ausgebildeten Halte- und Führungsmitteln (7, 107, 207) des anderen Teils dann zusammenwirken können, wenn sich der Sattelauflieger in Anhängestellung befindet, um vor der Hinterachse (13, 113, 213) der Zugmaschine die senkrecht verlaufenden Längsebenen (P1, P2) der Zugmaschine und des Sattelaufliegers im wesentlichen beieinander zu halten und um dem Fahrgestell der Zugmaschine die Last zu übertragen, die aus dem vorderen Abschnitt des Sattelaufliegers besteht.

11. Straßenlastfahrzeug nach Anspruch 10, **dadurch gekennzeichnet, dass** die Halte- und Führungsmittel (7, 107) zwei Gleitschienen (70, 170) mit U-förmigem Querschnitt aufweisen, welche symmetrisch beiderseits der Längsebene (P1 oder P2) des ersten Teils einander gegenüberliegend montiert sind, wobei die komplementär ausgeführten Halte- und Führungsmittel (6, 106) zwei Rollen (60, 160) aufweisen, die um eine quer verlaufende Drehachse drehbar beiderseits der senkrecht verlaufenden Längsebene des zweiten Teils (P1 oder P2) gelagert sind, wobei in der Sattelauflieger-Anhängestellung die Rollen in den Gleitschienen gleiten können und ihre quer verlaufende Drehachse im wesentlichen quer mit der Nickachse (A1, A2) fluchtet.

12. Straßenlastfahrzeug nach Anspruch 10, **dadurch gekennzeichnet, dass** die Halte- und Führungsmittel der Kupplungsvorrichtung zumindest zwei Längsbuchsen (270) mit geschlossenem Querschnitt aufweisen, die symmetrisch beiderseits der Längsebene des ersten Teils gelagert sind, und wobei die komplementär ausgeführten Halte- und Führungsmittel zumindest zwei Längsarme (260) aufweisen, wobei die Arme um eine quer verlaufende Drehachse verschwenkbar symmetrisch beiderseits der senkrechten Längsebene des zweiten Teils gelagert sind, wobei die Endabschnitte der Arme zwei Glieder (206) bilden, die in die Buchsen eingreifen können und wobei in der Sattelauflieger-Anhängestellung die Arme mit ihrer quer verlaufenden Drehachse im wesentlichen mit der Nickachse (A3) fluchten.

13. Straßenlastfahrzeug nach einem der Ansprüche 1 bis 13, **dadurch gekennzeichnet, dass** der unter Last stehende Schwerpunkt des Sattelaufliegers (103) im wesentlichen oberhalb seiner Tragachse bzw. Tragachsen (133) liegt.

14. Straßenlastfahrzeug nach einem der Ansprüche 1 bis 12, **dadurch gekennzeichnet, dass** der unter Last stehende Schwerpunkt des Sattelaufliegers (3, 203, 303, 403) vor seiner Tragachse bzw. seinen Tragachsen (33, 233, 333, 433a, 433b) liegt.
